(19) Europäisches Patentamt / European Patent Office / Office européen des brevets

(11) **EP 2 222 830 B1**

(12) **EUROPEAN PATENT SPECIFICATION**

(45) Date of publication and mention
of the grant of the patent:
**12.08.2015 Bulletin 2015/33**

(21) Application number: **07869143.3**

(22) Date of filing: **12.12.2007**

(51) Int Cl.:
*C12C 5/00* (2006.01)        *C12C 7/00* (2006.01)
*C12C 11/00* (2006.01)      *C12N 9/44* (2006.01)

(86) International application number:
**PCT/US2007/087209**

(87) International publication number:
**WO 2009/075682 (18.06.2009 Gazette 2009/25)**

(54) **MASHING PROCESS**

MAISCHVERFAHREN

PROCÉDÉ DE TREMPE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**01.09.2010 Bulletin 2010/35**

(73) Proprietors:
• **Novozymes A/S
2880 Bagsværd (DK)**
• **Novozymes Inc.
Davis, CA 95618 (US)**

(72) Inventors:
• **ELVIG, Niels
2840 Holte (DK)**
• **JOERGENSEN, Per Linaa
1302 Koebenhavn K (DK)**
• **THOMAS, Michael
Davis, California 95618 (US)**

(74) Representative: **Kofoed, Gertrud Sonne
Novozymes A/S
Patents
Krogshoejvej 36
2880 Bagsvaerd (DK)**

(56) References cited:
**WO-A-00/01796        WO-A-01/51620
WO-A-99/45124        WO-A-2004/011591
WO-A-2005/121305    WO-A-2007/113292
WO-A-2007/144393    US-A- 4 355 047**

• **KELLY ADRIAN P ET AL: "Molecular genetic
analysis of the pullulanase B gene of Bacillus
acidopullulyticus" FEMS MICROBIOLOGY
LETTERS, AMSTERDAM, NL, vol. 115, no. 1, 1
January 1994 (1994-01-01), pages 97-106,
XP002454724 ISSN: 0378-1097 cited in the
application**

Printed by Jouve, 75001 PARIS (FR)

SEQUENCE LISTING

<110> Novozymes A/S
Novozymes NA, Inc.
Elvig, Niels
Joergensen, Per L.
Thomas, Michael

<120> Mashing Process

<130> 11323.004-WO

<160> 14

<170> PatentIn version 3.4

<210> 1
<211> 921
<212> PRT
<213> Bacillus acidopullulyticus

<220>
<221> mat_peptide
<222> (1)..(921)

<400> 1

```
Asp Ser Thr Ser Thr Lys Val Ile Val His Tyr His Arg Phe Asp Ser
1               5                   10                  15

Asn Tyr Thr Asn Trp Asp Val Trp Met Trp Pro Tyr Gln Pro Val Asn
            20                  25                  30

Gly Asn Gly Ala Ala Tyr Gln Phe Thr Gly Thr Asn Asp Asp Phe Gly
            35                  40                  45

Ala Val Ala Asp Thr Gln Val Pro Gly Asp Asn Thr Gln Val Gly Leu
        50                  55                  60

Ile Val Arg Lys Asn Asp Trp Ser Glu Lys Asn Thr Pro Asn Asp Leu
65                  70                  75                  80

His Ile Asp Leu Ala Lys Gly His Glu Val Trp Ile Val Gln Gly Asp
                85                  90                  95

Pro Thr Ile Tyr Tyr Asn Leu Ser Asp Ala Gln Ala Ala Ile Pro
            100                 105                 110

Ser Val Ser Asn Ala Tyr Leu Asp Asp Glu Lys Thr Val Leu Ala Lys
            115                 120                 125

Leu Ser Met Pro Met Thr Leu Ala Asp Ala Ala Ser Gly Phe Thr Val
```

130                         135                         140

Ile Asp Lys Thr Thr Gly Glu Lys Ile Pro Val Thr Ser Ala Val Ser
145                         150                         155                         160

Ala Asn Pro Val Thr Ala Val Leu Val Gly Asp Leu Gln Gln Ala Leu
                    165                         170                         175

Gly Ala Ala Asn Asn Trp Ser Pro Asp Asp Asp His Thr Leu Leu Lys
                    180                         185                         190

Lys Ile Asn Pro Asn Leu Tyr Gln Leu Ser Gly Thr Leu Pro Ala Gly
                    195                         200                         205

Thr Tyr Gln Tyr Lys Ile Ala Leu Asp His Ser Trp Asn Thr Ser Tyr
        210                         215                         220

Pro Gly Asn Asn Val Ser Leu Thr Val Pro Gln Gly Gly Glu Lys Val
225                         230                         235                         240

Thr Phe Thr Tyr Ile Pro Ser Thr Asn Gln Val Phe Asp Ser Val Asn
                    245                         250                         255

His Pro Asn Gln Ala Phe Pro Thr Ser Ser Ala Gly Val Gln Thr Asn
                    260                         265                         270

Leu Val Gln Leu Thr Leu Ala Ser Ala Pro Asp Val Thr His Asn Leu
        275                         280                         285

Asp Val Ala Ala Asp Gly Tyr Lys Ala His Asn Ile Leu Pro Arg Asn
        290                         295                         300

Val Leu Asn Leu Pro Arg Tyr Asp Tyr Ser Gly Asn Asp Leu Gly Asn
305                         310                         315                         320

Val Tyr Ser Lys Asp Ala Thr Ser Phe Arg Val Trp Ala Pro Thr Ala
                    325                         330                         335

Ser Asn Val Gln Leu Leu Leu Tyr Asn Ser Glu Lys Gly Ser Ile Thr
                    340                         345                         350

Lys Gln Leu Glu Met Gln Lys Ser Asp Asn Gly Thr Trp Lys Leu Gln
        355                         360                         365

Val Ser Gly Asn Leu Glu Asn Trp Tyr Tyr Leu Tyr Gln Val Thr Val
        370                         375                         380

14

```
Asn Gly Thr Thr Gln Thr Ala Val Asp Pro Tyr Ala Arg Ala Ile Ser
385                 390                 395                 400

Val Asn Ala Thr Arg Gly Met Ile Val Asp Leu Lys Ala Thr Asp Pro
                405                 410                 415

Ala Gly Trp Gln Gly Asp His Glu Gln Thr Pro Ala Asn Pro Val Asp
            420                 425                 430

Glu Val Ile Tyr Glu Ala His Val Arg Asp Phe Ser Ile Asp Ala Asn
            435                 440                 445

Ser Gly Met Lys Asn Lys Gly Lys Tyr Leu Ala Phe Thr Glu His Gly
    450                 455                 460

Thr Lys Gly Pro Asp His Val Lys Thr Gly Ile Asp Ser Leu Lys Glu
465                 470                 475                 480

Leu Gly Ile Thr Thr Val Gln Leu Gln Pro Val Glu Glu Phe Asn Ser
                485                 490                 495

Ile Asp Glu Thr Gln Pro Asp Thr Tyr Asn Trp Gly Tyr Asp Pro Arg
            500                 505                 510

Asn Tyr Asn Val Pro Glu Gly Ala Tyr Ala Thr Thr Pro Glu Gly Thr
    515                 520                 525

Ala Arg Ile Thr Glu Leu Lys Gln Leu Ile Gln Ser Leu His Gln Gln
    530                 535                 540

Arg Ile Gly Val Asn Met Asp Val Val Tyr Asn His Thr Phe Asp Val
545                 550                 555                 560

Met Val Ser Asp Phe Asp Lys Ile Val Pro Gln Tyr Tyr Tyr Arg Thr
                565                 570                 575

Asp Ser Asn Gly Asn Tyr Thr Asn Gly Ser Gly Cys Gly Asn Glu Phe
            580                 585                 590

Ala Thr Glu His Pro Met Ala Gln Lys Phe Val Leu Asp Ser Val Asn
    595                 600                 605

Tyr Trp Val Asn Glu Tyr His Val Asp Gly Phe Arg Phe Asp Leu Met
    610                 615                 620
```

```
Ala Leu Leu Gly Lys Asp Thr Met Ala Lys Ile Ser Asn Glu Leu His
625             630             635             640


Ala Ile Asn Pro Gly Ile Val Leu Tyr Gly Glu Pro Trp Thr Gly Gly
                645             650             655


Thr Ser Gly Leu Ser Ser Asp Gln Leu Val Thr Lys Gly Gln Gln Lys
            660             665             670


Gly Leu Gly Ile Gly Val Phe Asn Asp Asn Ile Arg Asn Gly Leu Asp
            675             680             685


Gly Asn Val Phe Asp Lys Thr Ala Gln Gly Phe Ala Thr Gly Asp Pro
690             695             700


Asn Gln Val Asp Val Ile Lys Asn Gly Val Ile Gly Ser Ile Gln Asp
705             710             715             720


Phe Thr Ser Ala Pro Ser Glu Thr Ile Asn Tyr Val Thr Ser His Asp
                725             730             735


Asn Met Thr Leu Trp Asp Lys Ile Leu Ala Ser Asn Pro Ser Asp Thr
            740             745             750


Glu Ala Asp Arg Ile Lys Met Asp Glu Leu Ala His Ala Val Val Phe
            755             760             765


Thr Ser Gln Gly Val Pro Phe Met Gln Gly Gly Glu Glu Met Leu Arg
770             775             780


Thr Lys Gly Gly Asn Asp Asn Ser Tyr Asn Ala Gly Asp Ser Val Asn
785             790             795             800


Gln Phe Asp Trp Ser Arg Lys Ala Gln Phe Lys Asp Val Phe Asp Tyr
            805             810             815


Phe Ser Ser Met Ile His Leu Arg Asn Gln His Pro Ala Phe Arg Met
            820             825             830


Thr Thr Ala Asp Gln Ile Lys Gln Asn Leu Thr Phe Leu Glu Ser Pro
            835             840             845


Thr Asn Thr Val Ala Phe Glu Leu Lys Asn Tyr Ala Asn His Asp Thr
            850             855             860
```

16

```
Trp Lys Asn Ile Ile Val Met Tyr Asn Pro Asn Lys Thr Ser Gln Thr
865             870             875             880

Leu Asn Leu Pro Ser Gly Asp Trp Thr Ile Val Gly Leu Gly Asp Gln
                885             890             895

Ile Gly Glu Lys Ser Leu Gly His Val Met Gly Asn Val Gln Val Pro
            900             905             910

Ala Ile Ser Thr Leu Ile Leu Lys Gln
        915             920
```

<210> 2
<211> 928
<212> PRT
<213> Bacillus deramificans

<220>
<221> mat_peptide
<222> (1)..(928)

<400> 2

```
Asp Gly Asn Thr Thr Thr Ile Ile Val His Tyr Phe Arg Pro Ala Gly
1           5               10              15

Asp Tyr Gln Pro Trp Ser Leu Trp Met Trp Pro Lys Asp Gly Gly Gly
            20              25              30

Ala Glu Tyr Asp Phe Asn Gln Pro Ala Asp Ser Phe Gly Ala Val Ala
        35              40              45

Ser Ala Asp Ile Pro Gly Asn Pro Ser Gln Val Gly Ile Ile Val Arg
        50              55              60

Thr Gln Asp Trp Thr Lys Asp Val Ser Ala Asp Arg Tyr Ile Asp Leu
65              70              75              80

Ser Lys Gly Asn Glu Val Trp Leu Val Glu Gly Asn Ser Gln Ile Phe
                85              90              95

Tyr Asn Glu Lys Asp Ala Glu Asp Ala Ala Lys Pro Ala Val Ser Asn
            100             105             110

Ala Tyr Leu Asp Ala Ser Asn Gln Val Leu Val Lys Leu Ser Gln Pro
        115             120             125

Leu Thr Leu Gly Glu Gly Ala Ser Gly Phe Thr Val His Asp Asp Thr
```

```
              130                    135                        140


Ala Asn Lys Asp Ile Pro Val Thr Ser Val Lys Asp Ala Ser Leu Gly
145                 150                 155                 160


Gln Asp Val Thr Ala Val Leu Ala Gly Thr Phe Gln His Ile Phe Gly
                165                 170                 175


Gly Ser Asp Trp Ala Pro Asp Asn His Ser Thr Leu Leu Lys Lys Val
                180                 185                 190


Thr Asn Asn Leu Tyr Gln Phe Ser Gly Asp Leu Pro Glu Gly Asn Tyr
                195                 200                 205


Gln Tyr Lys Val Ala Leu Asn Asp Ser Trp Asn Asn Pro Ser Tyr Pro
        210                 215                 220


Ser Asp Asn Ile Asn Leu Thr Val Pro Ala Gly Gly Ala His Val Thr
225                 230                 235                 240


Phe Ser Tyr Ile Pro Ser Thr His Ala Val Tyr Asp Thr Ile Asn Asn
                245                 250                 255


Pro Asn Ala Asp Leu Gln Val Glu Ser Gly Val Lys Thr Asp Leu Val
                260                 265                 270


Thr Val Thr Leu Gly Glu Asp Pro Asp Val Ser His Thr Leu Ser Ile
        275                 280                 285


Gln Thr Asp Gly Tyr Gln Ala Lys Gln Val Ile Pro Arg Asn Val Leu
        290                 295                 300


Asn Ser Ser Gln Tyr Tyr Tyr Ser Gly Asp Asp Leu Gly Asn Thr Tyr
305                 310                 315                 320


Thr Gln Lys Ala Thr Thr Phe Lys Val Trp Ala Pro Thr Ser Thr Gln
                325                 330                 335


Val Asn Val Leu Leu Tyr Asp Ser Ala Thr Gly Ser Val Thr Lys Ile
                340                 345                 350


Val Pro Met Thr Ala Ser Gly His Gly Val Trp Glu Ala Thr Val Asn
                355                 360                 365


Gln Asn Leu Glu Asn Trp Tyr Tyr Met Tyr Glu Val Thr Gly Gln Gly
        370                 375                 380
```

```
Ser Thr Arg Thr Ala Val Asp Pro Tyr Ala Thr Ala Ile Ala Pro Asn
385             390             395                     400

Gly Thr Arg Gly Met Ile Val Asp Leu Ala Lys Thr Asp Pro Ala Gly
                405             410             415

Trp Asn Ser Asp Lys His Ile Thr Pro Lys Asn Ile Glu Asp Glu Val
            420             425             430

Ile Tyr Glu Met Asp Val Arg Asp Phe Ser Ile Asp Pro Asn Ser Gly
        435             440             445

Met Lys Asn Lys Gly Lys Tyr Leu Ala Leu Thr Glu Lys Gly Thr Lys
    450             455             460

Gly Pro Asp Asn Val Lys Thr Gly Ile Asp Ser Leu Lys Gln Leu Gly
465             470             475                     480

Ile Thr His Val Gln Leu Met Pro Val Phe Ala Ser Asn Ser Val Asp
            485             490                     495

Glu Thr Asp Pro Thr Gln Asp Asn Trp Gly Tyr Asp Pro Arg Asn Tyr
            500             505             510

Asp Val Pro Glu Gly Gln Tyr Ala Thr Asn Ala Asn Gly Asn Ala Arg
        515             520             525

Ile Lys Glu Phe Lys Glu Met Val Leu Ser Leu His Arg Glu His Ile
    530             535             540

Gly Val Asn Met Asp Val Val Tyr Asn His Thr Phe Ala Thr Gln Ile
545             550             555                     560

Ser Asp Phe Asp Lys Ile Val Pro Glu Tyr Tyr Tyr Arg Thr Asp Asp
            565             570             575

Ala Gly Asn Tyr Thr Asn Gly Ser Gly Thr Gly Asn Glu Ile Ala Ala
        580             585             590

Glu Arg Pro Met Val Gln Lys Phe Ile Ile Asp Ser Leu Lys Tyr Trp
    595             600             605

Val Asn Glu Tyr His Ile Asp Gly Phe Arg Phe Asp Leu Met Ala Leu
    610             615             620
```

```
Leu Gly Lys Asp Thr Met Ser Lys Ala Ala Ser Glu Leu His Ala Ile
625             630             635             640

Asn Pro Gly Ile Ala Leu Tyr Gly Glu Pro Trp Thr Gly Gly Thr Ser
                645             650             655

Ala Leu Pro Asp Asp Gln Leu Leu Thr Lys Gly Ala Gln Lys Gly Met
            660             665             670

Gly Val Ala Val Phe Asn Asp Asn Leu Arg Asn Ala Leu Asp Gly Asn
            675             680             685

Val Phe Asp Ser Ser Ala Gln Gly Phe Ala Thr Gly Ala Thr Gly Leu
    690             695             700

Thr Asp Ala Ile Lys Asn Gly Val Glu Gly Ser Ile Asn Asp Phe Thr
705             710             715             720

Ser Ser Pro Gly Glu Thr Ile Asn Tyr Val Thr Ser His Asp Asn Tyr
            725             730             735

Thr Leu Trp Asp Lys Ile Ala Leu Ser Asn Pro Asn Asp Ser Glu Ala
            740             745             750

Asp Arg Ile Lys Met Asp Glu Leu Ala Gln Ala Val Val Met Thr Ser
    755             760             765

Gln Gly Val Pro Phe Met Gln Gly Gly Glu Glu Met Leu Arg Thr Lys
    770             775             780

Gly Gly Asn Asp Asn Ser Tyr Asn Ala Gly Asp Ala Val Asn Glu Phe
785             790             795             800

Asp Trp Ser Arg Lys Ala Gln Tyr Pro Asp Val Phe Asn Tyr Tyr Ser
            805             810             815

Gly Leu Ile His Leu Arg Leu Asp His Pro Ala Phe Arg Met Thr Thr
            820             825             830

Ala Asn Glu Ile Asn Ser His Leu Gln Phe Leu Asn Ser Pro Glu Asn
            835             840             845

Thr Val Ala Tyr Glu Leu Thr Asp His Val Asn Lys Asp Lys Trp Gly
    850             855             860
```

```
Asn Ile Ile Val Val Tyr Asn Pro Asn Lys Thr Val Ala Thr Ile Asn
865                 870             875                 880

Leu Pro Ser Gly Lys Trp Ala Ile Asn Ala Thr Ser Gly Lys Val Gly
                885             890                 895

Glu Ser Thr Leu Gly Gln Ala Glu Gly Ser Val Gln Val Pro Gly Ile
            900             905             910

Ser Met Met Ile Leu His Gln Glu Val Ser Pro Asp His Gly Lys Lys
        915             920             925
```

<210> 3
<211> 2589
<212> DNA
<213> Bacillus acidopullulyticus

<220>
<221> sig_peptide
<222> (1)..(99)

<220>
<221> CDS
<222> (1)..(2586)

<220>
<221> mat_peptide
<222> (100)..(2589)

<400> 3

```
atg tcc cta ata cgt tct agg tat aat cat ttt gtc att ctt ttt act       48
Met Ser Leu Ile Arg Ser Arg Tyr Asn His Phe Val Ile Leu Phe Thr
        -30             -25             -20

gtc gcc ata atg ttt cta aca gtt tgt ttc ccc gct tat aaa gct tta       96
Val Ala Ile Met Phe Leu Thr Val Cys Phe Pro Ala Tyr Lys Ala Leu
        -15             -10             -5

gca gat tct acc tcg aca gaa gtc att gtg cat tat cat cgt ttt gat      144
Ala Asp Ser Thr Ser Thr Glu Val Ile Val His Tyr His Arg Phe Asp
-1  1           5               10                      15

tct aac tat gca aat tgg gat cta tgg atg tgg cca tat caa cca gtt      192
Ser Asn Tyr Ala Asn Trp Asp Leu Trp Met Trp Pro Tyr Gln Pro Val
            20              25              30

aat ggt aat gga gca gca tac gag ttt tct gga aag gat gat ttt ggc      240
Asn Gly Asn Gly Ala Ala Tyr Glu Phe Ser Gly Lys Asp Asp Phe Gly
            35              40              45

gtt aaa gca gat gtt caa gtg cct ggg gat gat aca cag gta ggt ctg      288
Val Lys Ala Asp Val Gln Val Pro Gly Asp Asp Thr Gln Val Gly Leu
            50              55              60

att gtc cgt aca aat gat tgg agc caa aaa aat aca tca gac gat ctc      336
Ile Val Arg Thr Asn Asp Trp Ser Gln Lys Asn Thr Ser Asp Asp Leu
```

```
                65                        70                        75

     cat att gat ctg aca aag ggg cat gaa ata tgg att gtt cag ggg gat       384
     His Ile Asp Leu Thr Lys Gly His Glu Ile Trp Ile Val Gln Gly Asp
     80                      85                    90                    95

     ccc aat att tat tac aat ctg agt gat gcg cag gct gca gcg act cca       432
     Pro Asn Ile Tyr Tyr Asn Leu Ser Asp Ala Gln Ala Ala Ala Thr Pro
                         100                    105                   110

     aag gtt tcg aat gcg tat ttg gat aat gaa aaa aca gta ttg gca aag       480
     Lys Val Ser Asn Ala Tyr Leu Asp Asn Glu Lys Thr Val Leu Ala Lys
                     115                    120                   125

     cta act aat cca atg aca tta tca gat gga tca agc ggc ttt acg gtt       528
     Leu Thr Asn Pro Met Thr Leu Ser Asp Gly Ser Ser Gly Phe Thr Val
                 130                    135                   140

     aca gat aaa aca aca ggg gaa caa att cca gtt acc gct gca aca aat       576
     Thr Asp Lys Thr Thr Gly Glu Gln Ile Pro Val Thr Ala Ala Thr Asn
             145                    150                   155

     gcg aac tca gcc tcc tcg tct gag cag aca gac ttg gtt caa ttg acg       624
     Ala Asn Ser Ala Ser Ser Ser Glu Gln Thr Asp Leu Val Gln Leu Thr
     160                    165                   170                   175

     tta gcc agt gca ccg gat gtt tcc cat aca ata caa gta gga gca gcc       672
     Leu Ala Ser Ala Pro Asp Val Ser His Thr Ile Gln Val Gly Ala Ala
                         180                    185                   190

     ggt tat gaa gca gtc aat ctc ata cca cga aat gta tta aat ttg cct       720
     Gly Tyr Glu Ala Val Asn Leu Ile Pro Arg Asn Val Leu Asn Leu Pro
                     195                    200                   205

     cgt tat tat tac agc gga aat gat tta ggt aac gtt tat tca aat aag       768
     Arg Tyr Tyr Tyr Ser Gly Asn Asp Leu Gly Asn Val Tyr Ser Asn Lys
                 210                    215                   220

     gca acg gcc ttc cgt gta tgg gct cca act gct tcg gat gtc caa tta       816
     Ala Thr Ala Phe Arg Val Trp Ala Pro Thr Ala Ser Asp Val Gln Leu
             225                    230                   235

     ctt tta tac aat agt gaa aca gga cct gta acc aaa cag ctt gaa atg       864
     Leu Leu Tyr Asn Ser Glu Thr Gly Pro Val Thr Lys Gln Leu Glu Met
     240                    245                   250                   255

     caa aag agt gat aac ggt aca tgg aaa ctg aag gtc cct ggt aat ctg       912
     Gln Lys Ser Asp Asn Gly Thr Trp Lys Leu Lys Val Pro Gly Asn Leu
                     260                    265                   270

     aaa aat tgg tat tat ctc tat cag gta acg gtg aat ggg aag aca caa       960
     Lys Asn Trp Tyr Tyr Leu Tyr Gln Val Thr Val Asn Gly Lys Thr Gln
                 275                    280                   285

     aca gcc gtt gac cct tat gtg cgt gct att tca gtc aat gca aca cgt      1008
     Thr Ala Val Asp Pro Tyr Val Arg Ala Ile Ser Val Asn Ala Thr Arg
             290                    295                   300

     ggt atg ata gtc gat tta gaa gat acg aat cct cct gga tgg aaa gaa      1056
     Gly Met Ile Val Asp Leu Glu Asp Thr Asn Pro Pro Gly Trp Lys Glu
             305                    310                   315
```

```
gat cat caa cag aca cct gcg aac cca gtg gat gaa gta atc tac gaa        1104
Asp His Gln Gln Thr Pro Ala Asn Pro Val Asp Glu Val Ile Tyr Glu
320             325             330             335

gtg cat gtg cgt gat ttt tcg att gat gct aat tca ggc atg aaa aat        1152
Val His Val Arg Asp Phe Ser Ile Asp Ala Asn Ser Gly Met Lys Asn
                340             345             350

aaa ggg aaa tat ctt gcc ttt aca gaa cat ggc aca aaa ggc cct gat        1200
Lys Gly Lys Tyr Leu Ala Phe Thr Glu His Gly Thr Lys Gly Pro Asp
            355             360             365

aac gtg aaa acg ggt att gat agt ttg aag gaa tta gga atc aat gct        1248
Asn Val Lys Thr Gly Ile Asp Ser Leu Lys Glu Leu Gly Ile Asn Ala
        370             375             380

gtt caa tta cag ccg att gaa gaa ttt aac agc att gat gaa acc caa        1296
Val Gln Leu Gln Pro Ile Glu Glu Phe Asn Ser Ile Asp Glu Thr Gln
    385             390             395

cca aat atg tat aac tgg ggc tat gac cca aga aac tac aac gtc cct        1344
Pro Asn Met Tyr Asn Trp Gly Tyr Asp Pro Arg Asn Tyr Asn Val Pro
400             405             410             415

gaa gga gcg tat gca act aca cca gaa gga acg gct cgc att acc cag        1392
Glu Gly Ala Tyr Ala Thr Thr Pro Glu Gly Thr Ala Arg Ile Thr Gln
            420             425             430

tta aag caa ctg att caa agc att cat aaa gat cgg att gct atc aat        1440
Leu Lys Gln Leu Ile Gln Ser Ile His Lys Asp Arg Ile Ala Ile Asn
            435             440             445

atg gat gtg gtc tat aac cat acc ttt aac gta gga gtg tct gat ttt        1488
Met Asp Val Val Tyr Asn His Thr Phe Asn Val Gly Val Ser Asp Phe
        450             455             460

gat aag att gtt ccg caa tac tat tat cgg aca gac agc gca ggt aat        1536
Asp Lys Ile Val Pro Gln Tyr Tyr Tyr Arg Thr Asp Ser Ala Gly Asn
        465             470             475

tat acg aac ggc tca ggt gta ggt aat gaa att gcg acc gag cgt ccg        1584
Tyr Thr Asn Gly Ser Gly Val Gly Asn Glu Ile Ala Thr Glu Arg Pro
480             485             490             495

atg gtc caa aag ttc gtt ctg gat tct gtt aaa tat tgg gta aag gaa        1632
Met Val Gln Lys Phe Val Leu Asp Ser Val Lys Tyr Trp Val Lys Glu
            500             505             510

tac cat atc gac ggc ttc cgt ttc gat ctt atg gct ctt tta gga aaa        1680
Tyr His Ile Asp Gly Phe Arg Phe Asp Leu Met Ala Leu Leu Gly Lys
            515             520             525

gac acc atg gcc aaa ata tca aaa gag ctt cat gct att aat cct ggc        1728
Asp Thr Met Ala Lys Ile Ser Lys Glu Leu His Ala Ile Asn Pro Gly
        530             535             540

att gtc ctg tat gga gaa cca tgg act ggc ggt acc tct gga tta tca        1776
Ile Val Leu Tyr Gly Glu Pro Trp Thr Gly Gly Thr Ser Gly Leu Ser
    545             550             555
```

```
agc gac caa ctc gtt acg aaa ggt cag caa aag ggc ttg gga att ggc    1824
Ser Asp Gln Leu Val Thr Lys Gly Gln Gln Lys Gly Leu Gly Ile Gly
560             565         570             575

gta ttc aac gat aat att cgg aac gga ctc gat ggt aac gtt ttt gat    1872
Val Phe Asn Asp Asn Ile Arg Asn Gly Leu Asp Gly Asn Val Phe Asp
                580         585             590

aaa tcg gca caa gga ttt gca aca gga gat cca aac caa gtt aat gtc    1920
Lys Ser Ala Gln Gly Phe Ala Thr Gly Asp Pro Asn Gln Val Asn Val
            595             600         605

att aaa aat gga gtt atg gga agt att tca gat ttc act tcg gca cct    1968
Ile Lys Asn Gly Val Met Gly Ser Ile Ser Asp Phe Thr Ser Ala Pro
        610             615             620

agc gaa acc att aac tat gta aca agc cat gat aat atg aca ttg tgg    2016
Ser Glu Thr Ile Asn Tyr Val Thr Ser His Asp Asn Met Thr Leu Trp
    625             630             635

gat aaa att agc gca agt aat ccg aac gat aca caa gca gat cga att    2064
Asp Lys Ile Ser Ala Ser Asn Pro Asn Asp Thr Gln Ala Asp Arg Ile
640             645             650             655

aag atg gat gaa ttg gct caa gct gtg gta ttt act tca caa ggg gta    2112
Lys Met Asp Glu Leu Ala Gln Ala Val Val Phe Thr Ser Gln Gly Val
            660             665             670

cca ttt atg caa ggt gga gaa gaa atg ctg cgg aca aaa ggc ggt aat    2160
Pro Phe Met Gln Gly Gly Glu Glu Met Leu Arg Thr Lys Gly Gly Asn
            675             680             685

gat aat agt tac aat gcc ggg gat agc gtg aat cag ttc gat tgg tca    2208
Asp Asn Ser Tyr Asn Ala Gly Asp Ser Val Asn Gln Phe Asp Trp Ser
        690             695             700

aga aaa gca caa ttt gaa aat gta ttc gac tac tat tct tgg ttg att    2256
Arg Lys Ala Gln Phe Glu Asn Val Phe Asp Tyr Tyr Ser Trp Leu Ile
        705             710             715

cat cta cgt gat aat cac cca gca ttc cgt atg acg aca gcg gat caa    2304
His Leu Arg Asp Asn His Pro Ala Phe Arg Met Thr Thr Ala Asp Gln
720             725             730             735

atc aaa caa aat ctc act ttc ttg gat agc cca acg aac act gta gca    2352
Ile Lys Gln Asn Leu Thr Phe Leu Asp Ser Pro Thr Asn Thr Val Ala
            740             745             750

ttt gaa tta aaa aat cat gcc aat cat gat aaa tgg aaa aac att ata    2400
Phe Glu Leu Lys Asn His Ala Asn His Asp Lys Trp Lys Asn Ile Ile
            755             760             765

gtt atg tat aat cca aat aaa act gca caa act ctc act cta cca agt    2448
Val Met Tyr Asn Pro Asn Lys Thr Ala Gln Thr Leu Thr Leu Pro Ser
            770             775             780

gga aat tgg aca att gta gga tta ggc aat caa gta ggt gag aaa tca    2496
Gly Asn Trp Thr Ile Val Gly Leu Gly Asn Gln Val Gly Glu Lys Ser
    785             790             795

cta ggc cat gta aat ggc acg gtt gag gtg cca gct ctt agt acg atc    2544
Leu Gly His Val Asn Gly Thr Val Glu Val Pro Ala Leu Ser Thr Ile
```

```
Leu Gly His Val Asn Gly Thr Val Glu Val Pro Ala Leu Ser Thr Ile
800                 805             810                 815

att ctt cat cag ggt aca tct gaa gat gtc att gat caa aat taa          2589
Ile Leu His Gln Gly Thr Ser Glu Asp Val Ile Asp Gln Asn
            820             825
```

<210> 4
<211> 862
<212> PRT
<213> Bacillus acidopullulyticus

<400> 4

```
        Met Ser Leu Ile Arg Ser Arg Tyr Asn His Phe Val Ile Leu Phe Thr
                    -30                 -25                 -20

        Val Ala Ile Met Phe Leu Thr Val Cys Phe Pro Ala Tyr Lys Ala Leu
                    -15                 -10                 -5

        Ala Asp Ser Thr Ser Thr Glu Val Ile Val His Tyr His Arg Phe Asp
        -1  1                   5                   10                  15

        Ser Asn Tyr Ala Asn Trp Asp Leu Trp Met Trp Pro Tyr Gln Pro Val
                    20                  25                  30

        Asn Gly Asn Gly Ala Ala Tyr Glu Phe Ser Gly Lys Asp Asp Phe Gly
                    35                  40                  45

        Val Lys Ala Asp Val Gln Val Pro Gly Asp Asp Thr Gln Val Gly Leu
                    50                  55                  60

        Ile Val Arg Thr Asn Asp Trp Ser Gln Lys Asn Thr Ser Asp Asp Leu
                    65                  70                  75

        His Ile Asp Leu Thr Lys Gly His Glu Ile Trp Ile Val Gln Gly Asp
        80                  85                  90                  95

        Pro Asn Ile Tyr Tyr Asn Leu Ser Asp Ala Gln Ala Ala Thr Pro
                    100                 105                 110

        Lys Val Ser Asn Ala Tyr Leu Asp Asn Glu Lys Thr Val Leu Ala Lys
                    115                 120                 125

        Leu Thr Asn Pro Met Thr Leu Ser Asp Gly Ser Ser Gly Phe Thr Val
                    130                 135                 140

        Thr Asp Lys Thr Thr Gly Glu Gln Ile Pro Val Thr Ala Ala Thr Asn
                    145                 150                 155
```

26

```
Ala Asn Ser Ala Ser Ser Ser Glu Gln Thr Asp Leu Val Gln Leu Thr
160             165             170             175

Leu Ala Ser Ala Pro Asp Val Ser His Thr Ile Gln Val Gly Ala Ala
            180             185             190

Gly Tyr Glu Ala Val Asn Leu Ile Pro Arg Asn Val Leu Asn Leu Pro
            195             200             205

Arg Tyr Tyr Tyr Ser Gly Asn Asp Leu Gly Asn Val Tyr Ser Asn Lys
    210             215             220

Ala Thr Ala Phe Arg Val Trp Ala Pro Thr Ala Ser Asp Val Gln Leu
    225             230             235

Leu Leu Tyr Asn Ser Glu Thr Gly Pro Val Thr Lys Gln Leu Glu Met
240             245             250             255

Gln Lys Ser Asp Asn Gly Thr Trp Lys Leu Lys Val Pro Gly Asn Leu
            260             265             270

Lys Asn Trp Tyr Tyr Leu Tyr Gln Val Thr Val Asn Gly Lys Thr Gln
            275             280             285

Thr Ala Val Asp Pro Tyr Val Arg Ala Ile Ser Val Asn Ala Thr Arg
            290             295             300

Gly Met Ile Val Asp Leu Glu Asp Thr Asn Pro Pro Gly Trp Lys Glu
    305             310             315

Asp His Gln Gln Thr Pro Ala Asn Pro Val Asp Glu Val Ile Tyr Glu
320             325             330             335

Val His Val Arg Asp Phe Ser Ile Asp Ala Asn Ser Gly Met Lys Asn
            340             345             350

Lys Gly Lys Tyr Leu Ala Phe Thr Glu His Gly Thr Lys Gly Pro Asp
            355             360             365

Asn Val Lys Thr Gly Ile Asp Ser Leu Lys Glu Leu Gly Ile Asn Ala
            370             375             380

Val Gln Leu Gln Pro Ile Glu Glu Phe Asn Ser Ile Asp Glu Thr Gln
    385             390             395
```

```
Pro Asn Met Tyr Asn Trp Gly Tyr Asp Pro Arg Asn Tyr Asn Val Pro
400                 405                 410                     415

Glu Gly Ala Tyr Ala Thr Thr Pro Glu Gly Thr Ala Arg Ile Thr Gln
                420                 425                     430

Leu Lys Gln Leu Ile Gln Ser Ile His Lys Asp Arg Ile Ala Ile Asn
            435                 440                 445

Met Asp Val Val Tyr Asn His Thr Phe Asn Val Gly Val Ser Asp Phe
        450                 455                 460

Asp Lys Ile Val Pro Gln Tyr Tyr Arg Thr Asp Ser Ala Gly Asn
    465                 470                 475

Tyr Thr Asn Gly Ser Gly Val Gly Asn Glu Ile Ala Thr Glu Arg Pro
480                 485                 490                     495

Met Val Gln Lys Phe Val Leu Asp Ser Val Lys Tyr Trp Val Lys Glu
                500                 505                     510

Tyr His Ile Asp Gly Phe Arg Phe Asp Leu Met Ala Leu Leu Gly Lys
            515                 520                 525

Asp Thr Met Ala Lys Ile Ser Lys Glu Leu His Ala Ile Asn Pro Gly
        530                 535                 540

Ile Val Leu Tyr Gly Glu Pro Trp Thr Gly Gly Thr Ser Gly Leu Ser
    545                 550                 555

Ser Asp Gln Leu Val Thr Lys Gly Gln Gln Lys Gly Leu Gly Ile Gly
560                 565                 570                     575

Val Phe Asn Asp Asn Ile Arg Asn Gly Leu Asp Gly Asn Val Phe Asp
                580                 585                 590

Lys Ser Ala Gln Gly Phe Ala Thr Gly Asp Pro Asn Gln Val Asn Val
            595                 600                 605

Ile Lys Asn Gly Val Met Gly Ser Ile Ser Asp Phe Thr Ser Ala Pro
        610                 615                 620

Ser Glu Thr Ile Asn Tyr Val Thr Ser His Asp Asn Met Thr Leu Trp
        625                 630                 635
```

```
Asp Lys Ile Ser Ala Ser Asn Pro Asn Asp Thr Gln Ala Asp Arg Ile
640             645             650             655

Lys Met Asp Glu Leu Ala Gln Ala Val Val Phe Thr Ser Gln Gly Val
            660             665             670

Pro Phe Met Gln Gly Gly Glu Glu Met Leu Arg Thr Lys Gly Gly Asn
            675             680             685

Asp Asn Ser Tyr Asn Ala Gly Asp Ser Val Asn Gln Phe Asp Trp Ser
            690             695             700

Arg Lys Ala Gln Phe Glu Asn Val Phe Asp Tyr Tyr Ser Trp Leu Ile
    705             710             715

His Leu Arg Asp Asn His Pro Ala Phe Arg Met Thr Thr Ala Asp Gln
720             725             730             735

Ile Lys Gln Asn Leu Thr Phe Leu Asp Ser Pro Thr Asn Thr Val Ala
            740             745             750

Phe Glu Leu Lys Asn His Ala Asn His Asp Lys Trp Lys Asn Ile Ile
            755             760             765

Val Met Tyr Asn Pro Asn Lys Thr Ala Gln Thr Leu Thr Leu Pro Ser
    770             775             780

Gly Asn Trp Thr Ile Val Gly Leu Gly Asn Gln Val Gly Glu Lys Ser
    785             790             795

Leu Gly His Val Asn Gly Thr Val Glu Val Pro Ala Leu Ser Thr Ile
800             805             810             815

Ile Leu His Gln Gly Thr Ser Glu Asp Val Ile Asp Gln Asn
            820             825
```

<210> 5
<211> 2589
<212> DNA
<213> Bacillus acidopullulyticus

<220>
<221> CDS
<222> (1)..(2586)

<220>
<221> sig_peptide
<222> (1)..(99)

<220>
<221> mat_peptide
<222> (100)..(2586)

<400> 5

```
gtg tcc cta ata cgt tct agg tat aat cat ttt gtc att ctt ttt act        48
Val Ser Leu Ile Arg Ser Arg Tyr Asn His Phe Val Ile Leu Phe Thr
        -30             -25                 -20

gtc gcc ata atg ttt cta aca gtt tgt ttc ccc gct tat aaa gct tta        96
Val Ala Ile Met Phe Leu Thr Val Cys Phe Pro Ala Tyr Lys Ala Leu
        -15             -10                 -5

gca gat tct acc tcg aca gaa gtc att gtg cat tat cat cgt ttt gat       144
Ala Asp Ser Thr Ser Thr Glu Val Ile Val His Tyr His Arg Phe Asp
-1  1               5               10                  15

tct aac tat gca aat tgg gat cta tgg atg tgg cca tat caa cca gtt       192
Ser Asn Tyr Ala Asn Trp Asp Leu Trp Met Trp Pro Tyr Gln Pro Val
                20              25                  30

aat ggt aat gga gca gca tac gag ttt tct gga aag gat gat ttt ggc       240
Asn Gly Asn Gly Ala Ala Tyr Glu Phe Ser Gly Lys Asp Asp Phe Gly
                35              40                  45

gtt aaa gca gat gtt caa gtg cct ggg gat gat aca cag gta ggt ctg       288
Val Lys Ala Asp Val Gln Val Pro Gly Asp Asp Thr Gln Val Gly Leu
            50              55              60

att gtc cgt aca aat gat tgg agc caa aaa aat aca tca gac gat ctc       336
Ile Val Arg Thr Asn Asp Trp Ser Gln Lys Asn Thr Ser Asp Asp Leu
            65              70              75

cat att gat ctg aca aag ggg cat gaa ata tgg att gtt cag ggg gat       384
His Ile Asp Leu Thr Lys Gly His Glu Ile Trp Ile Val Gln Gly Asp
80              85              90                  95

ccc aat att tat tac aat ctg agt gat gcg cag gct gca gcg act cca       432
Pro Asn Ile Tyr Tyr Asn Leu Ser Asp Ala Gln Ala Ala Ala Thr Pro
                100             105                 110

aag gtt tcg aat gcg tat ttg gat aat gaa aaa aca gta ttg gca aag       480
Lys Val Ser Asn Ala Tyr Leu Asp Asn Glu Lys Thr Val Leu Ala Lys
            115             120                 125

cta act aat cca atg aca tta tca gat gga tca agc ggc ttt acg gtt       528
Leu Thr Asn Pro Met Thr Leu Ser Asp Gly Ser Ser Gly Phe Thr Val
            130             135                 140

aca gat aaa aca aca ggg gaa caa att cca gtt acc gct gca aca aat       576
Thr Asp Lys Thr Thr Gly Glu Gln Ile Pro Val Thr Ala Ala Thr Asn
            145             150                 155

gcg aac tca gcc tcc tcg tct gag cag aca gac ttg gtt caa ttg acg       624
Ala Asn Ser Ala Ser Ser Ser Glu Gln Thr Asp Leu Val Gln Leu Thr
160             165             170                 175

tta gcc agt gca ccg gat gtt tcc cat aca ata caa gta gga gca gcc       672
Leu Ala Ser Ala Pro Asp Val Ser His Thr Ile Gln Val Gly Ala Ala
                180             185                 190
```

```
ggt tat gaa gca gtc aat ctc ata cca cga aat gta tta aat ttg cct        720
Gly Tyr Glu Ala Val Asn Leu Ile Pro Arg Asn Val Leu Asn Leu Pro
            195                 200                 205

cgt tat tat tac agc gga aat gat tta ggt aac gtt tat tca aat aag        768
Arg Tyr Tyr Tyr Ser Gly Asn Asp Leu Gly Asn Val Tyr Ser Asn Lys
            210                 215                 220

gca acg gcc ttc cgt gta tgg gct cca act gct tcg gat gtc caa tta        816
Ala Thr Ala Phe Arg Val Trp Ala Pro Thr Ala Ser Asp Val Gln Leu
            225                 230                 235

ctt tta tac aat agt gaa aca gga cct gta acc aaa cag ctt gaa atg        864
Leu Leu Tyr Asn Ser Glu Thr Gly Pro Val Thr Lys Gln Leu Glu Met
240                 245                 250                 255

caa aag agt gat aac ggt aca tgg aaa ctg aag gtc cct ggt aat ctg        912
Gln Lys Ser Asp Asn Gly Thr Trp Lys Leu Lys Val Pro Gly Asn Leu
                    260                 265                 270

aaa aat tgg tat tat ctc tat cag gta acg gtg aat ggg aag aca caa        960
Lys Asn Trp Tyr Tyr Leu Tyr Gln Val Thr Val Asn Gly Lys Thr Gln
                275                 280                 285

aca gcc gtt gac cct tat gtg cgt gct att tca gtc aat gca aca cgt       1008
Thr Ala Val Asp Pro Tyr Val Arg Ala Ile Ser Val Asn Ala Thr Arg
            290                 295                 300

ggt atg ata gtc gat tta gaa gat acg aat cct cct gga tgg aaa gaa       1056
Gly Met Ile Val Asp Leu Glu Asp Thr Asn Pro Pro Gly Trp Lys Glu
    305                 310                 315

gat cat caa cag aca cct gcg aac cca gtg gat gaa gta atc tac gaa       1104
Asp His Gln Gln Thr Pro Ala Asn Pro Val Asp Glu Val Ile Tyr Glu
320                 325                 330                 335

gtg cat gtg cgt gat ttt tcg att gat gct aat tca ggc atg aaa aat       1152
Val His Val Arg Asp Phe Ser Ile Asp Ala Asn Ser Gly Met Lys Asn
                340                 345                 350

aaa ggg aaa tat ctt gcc ttt aca gaa cat ggc aca aaa ggc cct gat       1200
Lys Gly Lys Tyr Leu Ala Phe Thr Glu His Gly Thr Lys Gly Pro Asp
                355                 360                 365

aac gtg aaa acg ggt att gat agt ttg aag gaa tta gga atc aat gct       1248
Asn Val Lys Thr Gly Ile Asp Ser Leu Lys Glu Leu Gly Ile Asn Ala
            370                 375                 380

gtt caa tta cag ccg att gaa gaa ttt aac agc att gat gaa acc caa       1296
Val Gln Leu Gln Pro Ile Glu Glu Phe Asn Ser Ile Asp Glu Thr Gln
    385                 390                 395

cca aat atg tat aac tgg ggc tat gac cca aga aac tac aac gtc cct       1344
Pro Asn Met Tyr Asn Trp Gly Tyr Asp Pro Arg Asn Tyr Asn Val Pro
400                 405                 410                 415

gaa gga gcg tat gca act aca cca gaa gga acg gct cgc att acc cag       1392
Glu Gly Ala Tyr Ala Thr Thr Pro Glu Gly Thr Ala Arg Ile Thr Gln
            420                 425                 430
```

```
tta aag caa ctg att caa agc att cat aaa gat cgg att gct atc aat      1440
Leu Lys Gln Leu Ile Gln Ser Ile His Lys Asp Arg Ile Ala Ile Asn
            435                 440                 445

atg gat gtg gtc tat aac cat acc ttt aac gta gga gtg tct gat ttt      1488
Met Asp Val Val Tyr Asn His Thr Phe Asn Val Gly Val Ser Asp Phe
            450                 455                 460

gat aag att gtt ccg caa tac tat tat cgg aca gac agc gca ggt aat      1536
Asp Lys Ile Val Pro Gln Tyr Tyr Tyr Arg Thr Asp Ser Ala Gly Asn
            465                 470                 475

tat acg aac ggc tca ggt gta ggt aat gaa att gcg acc gag cgt ccg      1584
Tyr Thr Asn Gly Ser Gly Val Gly Asn Glu Ile Ala Thr Glu Arg Pro
480                 485                 490                 495

atg gtc caa aag ttc gtt ctg gat tct gtt aaa tat tgg gta aag gaa      1632
Met Val Gln Lys Phe Val Leu Asp Ser Val Lys Tyr Trp Val Lys Glu
                500                 505                 510

tac cat atc gac ggc ttc cgt ttc gat ctt atg gct ctt tta gga aaa      1680
Tyr His Ile Asp Gly Phe Arg Phe Asp Leu Met Ala Leu Leu Gly Lys
            515                 520                 525

gac acc atg gcc aaa ata tca aaa gag ctt cat gct att aat cct ggc      1728
Asp Thr Met Ala Lys Ile Ser Lys Glu Leu His Ala Ile Asn Pro Gly
            530                 535                 540

att gtc ctg tat gga gaa cca tgg act ggc ggt acc tct gga tta tca      1776
Ile Val Leu Tyr Gly Glu Pro Trp Thr Gly Gly Thr Ser Gly Leu Ser
            545                 550                 555

agc gac caa ctc gtt acg aaa ggt cag caa aag ggc ttg gga att ggc      1824
Ser Asp Gln Leu Val Thr Lys Gly Gln Gln Lys Gly Leu Gly Ile Gly
560                 565                 570                 575

gta ttc aac gat aat att cgg aac gga ctc gat ggt aac gtt ttt gat      1872
Val Phe Asn Asp Asn Ile Arg Asn Gly Leu Asp Gly Asn Val Phe Asp
            580                 585                 590

aaa tcg gca caa gga ttt gca aca gga gat cca aac caa gtt aat gtc      1920
Lys Ser Ala Gln Gly Phe Ala Thr Gly Asp Pro Asn Gln Val Asn Val
            595                 600                 605

att aaa aat aga gtt atg gga agt att tca gat ttc act tcg gca cct      1968
Ile Lys Asn Arg Val Met Gly Ser Ile Ser Asp Phe Thr Ser Ala Pro
            610                 615                 620

agc gaa acc att aac tat gta aca agc cat gat aat atg aca ttg tgg      2016
Ser Glu Thr Ile Asn Tyr Val Thr Ser His Asp Asn Met Thr Leu Trp
            625                 630                 635

gat aaa att agc gca agt aat ccg aac gat aca caa gca gat cga att      2064
Asp Lys Ile Ser Ala Ser Asn Pro Asn Asp Thr Gln Ala Asp Arg Ile
640                 645                 650                 655

aag atg gat gaa ttg gct caa gct gtg gta ttt act tca caa ggg gta      2112
Lys Met Asp Glu Leu Ala Gln Ala Val Val Phe Thr Ser Gln Gly Val
            660                 665                 670

cca ttt atg caa ggt gga gaa gaa atg ctg cgg aca aaa ggc ggt aat      2160
```

```
Pro Phe Met Gln Gly Gly Glu Glu Met Leu Arg Thr Lys Gly Gly Asn
            675             680             685

gat aat agt tac aat gcc ggg gat agc gtg aat cag ttc gat tgg tca      2208
Asp Asn Ser Tyr Asn Ala Gly Asp Ser Val Asn Gln Phe Asp Trp Ser
            690             695             700

aga aaa gca caa ttt gaa aat gta ttc gac tac tat tct tgg ttg att      2256
Arg Lys Ala Gln Phe Glu Asn Val Phe Asp Tyr Tyr Ser Trp Leu Ile
            705             710             715

cat cta cgt gat aat cac cca gca ttc cgt atg acg aca gcg gat caa      2304
His Leu Arg Asp Asn His Pro Ala Phe Arg Met Thr Thr Ala Asp Gln
720             725             730             735

atc aaa caa aat ctc act ttc ttg gat agc cca acg aac act gta gca      2352
Ile Lys Gln Asn Leu Thr Phe Leu Asp Ser Pro Thr Asn Thr Val Ala
            740             745             750

ttt gaa tta aaa aat cat gcc aat cat gat aaa tgg aaa aac att ata      2400
Phe Glu Leu Lys Asn His Ala Asn His Asp Lys Trp Lys Asn Ile Ile
            755             760             765

gtt atg tat aat cca aat aaa act gca caa act ctc act cta cca agt      2448
Val Met Tyr Asn Pro Asn Lys Thr Ala Gln Thr Leu Thr Leu Pro Ser
            770             775             780

gga aat tgg aca att gta gga tta ggc aat caa gta ggt gag aaa tca      2496
Gly Asn Trp Thr Ile Val Gly Leu Gly Asn Gln Val Gly Glu Lys Ser
            785             790             795

cta ggc cat gta aat ggc acg gtt gag gtg cca gct ctt agt acg atc      2544
Leu Gly His Val Asn Gly Thr Val Glu Val Pro Ala Leu Ser Thr Ile
800             805             810             815

att ctt cat cag ggt aca tct gaa gat gtc att gat caa aat taa        2589
Ile Leu His Gln Gly Thr Ser Glu Asp Val Ile Asp Gln Asn
            820             825
```

<210> 6
<211> 862
<212> PRT
<213> Bacillus acidopullulyticus

<400> 6

```
Val Ser Leu Ile Arg Ser Arg Tyr Asn His Phe Val Ile Leu Phe Thr
        -30             -25                 -20

Val Ala Ile Met Phe Leu Thr Val Cys Phe Pro Ala Tyr Lys Ala Leu
        -15             -10                 -5

Ala Asp Ser Thr Ser Thr Glu Val Ile Val His Tyr His Arg Phe Asp
-1  1               5                   10                      15

Ser Asn Tyr Ala Asn Trp Asp Leu Trp Met Trp Pro Tyr Gln Pro Val
            20              25                  30
```

```
Asn Gly Asn Gly Ala Ala Tyr Glu Phe Ser Gly Lys Asp Asp Phe Gly
            35                  40                  45

Val Lys Ala Asp Val Gln Val Pro Gly Asp Asp Thr Gln Val Gly Leu
        50                  55                  60

Ile Val Arg Thr Asn Asp Trp Ser Gln Lys Asn Thr Ser Asp Asp Leu
        65                  70                  75

His Ile Asp Leu Thr Lys Gly His Glu Ile Trp Ile Val Gln Gly Asp
80                  85                  90                  95

Pro Asn Ile Tyr Tyr Asn Leu Ser Asp Ala Gln Ala Ala Ala Thr Pro
                100                 105                 110

Lys Val Ser Asn Ala Tyr Leu Asp Asn Glu Lys Thr Val Leu Ala Lys
                115                 120                 125

Leu Thr Asn Pro Met Thr Leu Ser Asp Gly Ser Ser Gly Phe Thr Val
            130                 135                 140

Thr Asp Lys Thr Thr Gly Glu Gln Ile Pro Val Thr Ala Ala Thr Asn
    145                 150                 155

Ala Asn Ser Ala Ser Ser Ser Glu Gln Thr Asp Leu Val Gln Leu Thr
160                 165                 170                 175

Leu Ala Ser Ala Pro Asp Val Ser His Thr Ile Gln Val Gly Ala Ala
                180                 185                 190

Gly Tyr Glu Ala Val Asn Leu Ile Pro Arg Asn Val Leu Asn Leu Pro
            195                 200                 205

Arg Tyr Tyr Tyr Ser Gly Asn Asp Leu Gly Asn Val Tyr Ser Asn Lys
            210                 215                 220

Ala Thr Ala Phe Arg Val Trp Ala Pro Thr Ala Ser Asp Val Gln Leu
    225                 230                 235

Leu Leu Tyr Asn Ser Glu Thr Gly Pro Val Thr Lys Gln Leu Glu Met
240                 245                 250                 255

Gln Lys Ser Asp Asn Gly Thr Trp Lys Leu Lys Val Pro Gly Asn Leu
                260                 265                 270
```

```
Lys Asn Trp Tyr Tyr Leu Tyr Gln Val Thr Val Asn Gly Lys Thr Gln
            275                 280                 285

Thr Ala Val Asp Pro Tyr Val Arg Ala Ile Ser Val Asn Ala Thr Arg
            290                 295                 300

Gly Met Ile Val Asp Leu Glu Asp Thr Asn Pro Pro Gly Trp Lys Glu
        305                 310                 315

Asp His Gln Gln Thr Pro Ala Asn Pro Val Asp Glu Val Ile Tyr Glu
320                 325                 330                 335

Val His Val Arg Asp Phe Ser Ile Asp Ala Asn Ser Gly Met Lys Asn
            340                 345                 350

Lys Gly Lys Tyr Leu Ala Phe Thr Glu His Gly Thr Lys Gly Pro Asp
            355                 360                 365

Asn Val Lys Thr Gly Ile Asp Ser Leu Lys Glu Leu Gly Ile Asn Ala
            370                 375                 380

Val Gln Leu Gln Pro Ile Glu Glu Phe Asn Ser Ile Asp Glu Thr Gln
        385                 390                 395

Pro Asn Met Tyr Asn Trp Gly Tyr Asp Pro Arg Asn Tyr Asn Val Pro
400                 405                 410                 415

Glu Gly Ala Tyr Ala Thr Thr Pro Glu Gly Thr Ala Arg Ile Thr Gln
                420                 425                 430

Leu Lys Gln Leu Ile Gln Ser Ile His Lys Asp Arg Ile Ala Ile Asn
            435                 440                 445

Met Asp Val Val Tyr Asn His Thr Phe Asn Val Gly Val Ser Asp Phe
        450                 455                 460

Asp Lys Ile Val Pro Gln Tyr Tyr Arg Thr Asp Ser Ala Gly Asn
        465                 470                 475

Tyr Thr Asn Gly Ser Gly Val Gly Asn Glu Ile Ala Thr Glu Arg Pro
480                 485                 490                 495

Met Val Gln Lys Phe Val Leu Asp Ser Val Lys Tyr Trp Val Lys Glu
                500                 505                 510
```

37

```
Tyr His Ile Asp Gly Phe Arg Phe Asp Leu Met Ala Leu Leu Gly Lys
            515             520             525

Asp Thr Met Ala Lys Ile Ser Lys Glu Leu His Ala Ile Asn Pro Gly
            530             535             540

Ile Val Leu Tyr Gly Glu Pro Trp Thr Gly Gly Thr Ser Gly Leu Ser
            545             550             555

Ser Asp Gln Leu Val Thr Lys Gly Gln Gln Lys Gly Leu Gly Ile Gly
560             565             570             575

Val Phe Asn Asp Asn Ile Arg Asn Gly Leu Asp Gly Asn Val Phe Asp
            580             585             590

Lys Ser Ala Gln Gly Phe Ala Thr Gly Asp Pro Asn Gln Val Asn Val
            595             600             605

Ile Lys Asn Arg Val Met Gly Ser Ile Ser Asp Phe Thr Ser Ala Pro
            610             615             620

Ser Glu Thr Ile Asn Tyr Val Thr Ser His Asp Asn Met Thr Leu Trp
            625             630             635

Asp Lys Ile Ser Ala Ser Asn Pro Asn Asp Thr Gln Ala Asp Arg Ile
640             645             650             655

Lys Met Asp Glu Leu Ala Gln Ala Val Val Phe Thr Ser Gln Gly Val
            660             665             670

Pro Phe Met Gln Gly Gly Glu Glu Met Leu Arg Thr Lys Gly Gly Asn
            675             680             685

Asp Asn Ser Tyr Asn Ala Gly Asp Ser Val Asn Gln Phe Asp Trp Ser
            690             695             700

Arg Lys Ala Gln Phe Glu Asn Val Phe Asp Tyr Tyr Ser Trp Leu Ile
            705             710             715

His Leu Arg Asp Asn His Pro Ala Phe Arg Met Thr Thr Ala Asp Gln
720             725             730             735

Ile Lys Gln Asn Leu Thr Phe Leu Asp Ser Pro Thr Asn Thr Val Ala
            740             745             750

Phe Glu Leu Lys Asn His Ala Asn His Asp Lys Trp Lys Asn Ile Ile
```

755　　　　　　　　760　　　　　　　　765

Val Met Tyr Asn Pro Asn Lys Thr Ala Gln Thr Leu Thr Leu Pro Ser
　　　770　　　　　　　775　　　　　　　780

Gly Asn Trp Thr Ile Val Gly Leu Gly Asn Gln Val Gly Glu Lys Ser
　　　785　　　　　　　790　　　　　　　795

Leu Gly His Val Asn Gly Thr Val Glu Val Pro Ala Leu Ser Thr Ile
800　　　　　　　805　　　　　　　810　　　　　　　815

Ile Leu His Gln Gly Thr Ser Glu Asp Val Ile Asp Gln Asn
　　　　　　820　　　　　　　825

<210> 7
<211> 483
<212> PRT
<213> Bacillus licheniformis

<220>
<221> mat_peptide
<222> (1)..(483)

<400> 7

Ala Asn Leu Asn Gly Thr Leu Met Gln Tyr Phe Glu Trp Tyr Met Pro
1　　　　　　　5　　　　　　　10　　　　　　　15

Asn Asp Gly Gln His Trp Arg Arg Leu Gln Asn Asp Ser Ala Tyr Leu
　　　　　20　　　　　　　25　　　　　　　30

Ala Glu His Gly Ile Thr Ala Val Trp Ile Pro Pro Ala Tyr Lys Gly
　　　35　　　　　　　40　　　　　　　45

Thr Ser Gln Ala Asp Val Gly Tyr Gly Ala Tyr Asp Leu Tyr Asp Leu
　　　50　　　　　　　55　　　　　　　60

Gly Glu Phe His Gln Lys Gly Thr Val Arg Thr Lys Tyr Gly Thr Lys
65　　　　　　　70　　　　　　　75　　　　　　　80

Gly Glu Leu Gln Ser Ala Ile Lys Ser Leu His Ser Arg Asp Ile Asn
　　　　　85　　　　　　　90　　　　　　　95

Val Tyr Gly Asp Val Val Ile Asn His Lys Gly Gly Ala Asp Ala Thr
　　　　　100　　　　　　　105　　　　　　　110

Glu Asp Val Thr Ala Val Glu Val Asp Pro Ala Asp Arg Asn Arg Val
　　　　　115　　　　　　　120　　　　　　　125

```
Ile Ser Gly Glu His Leu Ile Lys Ala Trp Thr His Phe His Phe Pro
    130                 135             140

Gly Arg Gly Ser Thr Tyr Ser Asp Phe Lys Trp His Trp Tyr His Phe
145                 150             155                 160

Asp Gly Thr Asp Trp Asp Glu Ser Arg Lys Leu Asn Arg Ile Tyr Lys
                165                 170                 175

Phe Gln Gly Lys Ala Trp Asp Trp Glu Val Ser Asn Glu Asn Gly Asn
            180                 185                 190

Tyr Asp Tyr Leu Met Tyr Ala Asp Ile Asp Tyr Asp His Pro Asp Val
        195                 200                 205

Ala Ala Glu Ile Lys Arg Trp Gly Thr Trp Tyr Ala Asn Glu Leu Gln
    210                 215                 220

Leu Asp Gly Phe Arg Leu Asp Ala Val Lys His Ile Lys Phe Ser Phe
225                 230                 235                 240

Leu Arg Asp Trp Val Asn His Val Arg Glu Lys Thr Gly Lys Glu Met
                245                 250                 255

Phe Thr Val Ala Glu Tyr Trp Gln Asn Asp Leu Gly Ala Leu Glu Asn
            260                 265                 270

Tyr Leu Asn Lys Thr Asn Phe Asn His Ser Val Phe Asp Val Pro Leu
        275                 280                 285

His Tyr Gln Phe His Ala Ala Ser Thr Gln Gly Gly Gly Tyr Asp Met
    290                 295                 300

Arg Lys Leu Leu Asn Gly Thr Val Val Ser Lys His Pro Leu Lys Ser
305                 310                 315                 320

Val Thr Phe Val Asp Asn His Asp Thr Gln Pro Gly Gln Ser Leu Glu
                325                 330                 335

Ser Thr Val Gln Thr Trp Phe Lys Pro Leu Ala Tyr Ala Phe Ile Leu
            340                 345                 350

Thr Arg Glu Ser Gly Tyr Pro Gln Val Phe Tyr Gly Asp Met Tyr Gly
        355                 360                 365
```

```
        Thr Lys Gly Asp Ser Gln Arg Glu Ile Pro Ala Leu Lys His Lys Ile
            370                 375                 380


        Glu Pro Ile Leu Lys Ala Arg Lys Gln Tyr Ala Tyr Gly Ala Gln His
            385                 390                 395                 400


        Asp Tyr Phe Asp His His Asp Ile Val Gly Trp Thr Arg Glu Gly Asp
                        405                 410                 415


        Ser Ser Val Ala Asn Ser Gly Leu Ala Ala Leu Ile Thr Asp Gly Pro
                    420                 425                 430


        Gly Gly Ala Lys Arg Met Tyr Val Gly Arg Gln Asn Ala Gly Glu Thr
                    435                 440                 445


        Trp His Asp Ile Thr Gly Asn Arg Ser Glu Pro Val Val Ile Asn Ser
            450                 455                 460


        Glu Gly Trp Gly Glu Phe His Val Asn Gly Gly Ser Val Ser Ile Tyr
            465                 470                 475                 480


        Val Gln Arg
```

<210> 8
<211> 2160
<212> DNA
<213> Bacillus sp.

<220>
<221> CDS
<222> (1)..(2157)

<220>
<221> mat_peptide
<222> (100)..(2157)

<400> 8

```
atg aaa aag aaa acg ctt tct tta ttt gtg gga ctg atg ctc ctc atc          48
Met Lys Lys Lys Thr Leu Ser Leu Phe Val Gly Leu Met Leu Leu Ile
            -30                 -25                 -20

ggt ctt ctg ttc agc ggt tct ctt ccg tac aat cca aac gcc gct gaa          96
Gly Leu Leu Phe Ser Gly Ser Leu Pro Tyr Asn Pro Asn Ala Ala Glu
            -15                 -10                 -5

gcc agc agt tcc gca agc gtc aaa ggg gac gtg att tac cag att atc         144
Ala Ser Ser Ser Ala Ser Val Lys Gly Asp Val Ile Tyr Gln Ile Ile
-1  1               5                   10                  15

att gac cgg ttt tac gat ggg gac acg acg aac aac aat cct gcc aaa         192
```

```
Ile Asp Arg Phe Tyr Asp Gly Asp Thr Thr Asn Asn Asn Pro Ala Lys
             20                  25                  30

agt tat gga ctt tac gat ccg acc aaa tcg aag tgg aaa atg tat tgg      240
Ser Tyr Gly Leu Tyr Asp Pro Thr Lys Ser Lys Trp Lys Met Tyr Trp
             35                  40                  45

ggc ggg gat ctg gag ggg gtt cgt caa aaa ctt cct tat ctt aaa cag      288
Gly Gly Asp Leu Glu Gly Val Arg Gln Lys Leu Pro Tyr Leu Lys Gln
             50                  55                  60

ctg ggc gta acg aca atc tgg ttg tcc ccg gtt ttg gac aat ctg gat      336
Leu Gly Val Thr Thr Ile Trp Leu Ser Pro Val Leu Asp Asn Leu Asp
         65                  70                  75

aca ctg gcg ggc acc gat aac acg ggc tat cac gga tac tgg acg cgc      384
Thr Leu Ala Gly Thr Asp Asn Thr Gly Tyr His Gly Tyr Trp Thr Arg
80                  85                  90                  95

gat ttt aaa cag att gag gaa cat ttc ggg aat tgg acc aca ttt gac      432
Asp Phe Lys Gln Ile Glu Glu His Phe Gly Asn Trp Thr Thr Phe Asp
                 100                 105                 110

acg ttg gtc aat gat gct cac caa aac gga atc aag gtg att gtc gac      480
Thr Leu Val Asn Asp Ala His Gln Asn Gly Ile Lys Val Ile Val Asp
             115                 120                 125

ttt gtg ccc aat cat tcg act cct ttt aag gca aac gat tcc acc ttt      528
Phe Val Pro Asn His Ser Thr Pro Phe Lys Ala Asn Asp Ser Thr Phe
             130                 135                 140

gcg gaa ggc ggc gcc ctc tac aac aat gga acc tat atg ggc aat tat      576
Ala Glu Gly Gly Ala Leu Tyr Asn Asn Gly Thr Tyr Met Gly Asn Tyr
             145                 150                 155

ttt gat gac gca aca aaa ggg tac ttc cac cat aat ggg gac atc agc      624
Phe Asp Asp Ala Thr Lys Gly Tyr Phe His His Asn Gly Asp Ile Ser
160                 165                 170                 175

aac tgg gac gac cgg tac gag gcg caa tgg aaa aac ttc acg gat cca      672
Asn Trp Asp Asp Arg Tyr Glu Ala Gln Trp Lys Asn Phe Thr Asp Pro
                 180                 185                 190

gcc ggt ttc tcg ctt gcc gat ttg tcg cag gaa aat ggc acg att gct      720
Ala Gly Phe Ser Leu Ala Asp Leu Ser Gln Glu Asn Gly Thr Ile Ala
             195                 200                 205

caa tac ctg acc gat gcg gcg gtt caa ttg gta gca cat gga gcg gat      768
Gln Tyr Leu Thr Asp Ala Ala Val Gln Leu Val Ala His Gly Ala Asp
             210                 215                 220

ggt ttg cgg att gat gcg gtg aag cat ttt aat tcg ggg ttc tcc aaa      816
Gly Leu Arg Ile Asp Ala Val Lys His Phe Asn Ser Gly Phe Ser Lys
         225                 230                 235

tcg ttg gcc gat aaa ctg tac caa aag aaa gac att ttc ctg gtg ggg      864
Ser Leu Ala Asp Lys Leu Tyr Gln Lys Lys Asp Ile Phe Leu Val Gly
240                 245                 250                 255

gaa tgg tac gga gat gac ccc gga aca gcc aat cat ctg gaa aag gtc      912
Glu Trp Tyr Gly Asp Asp Pro Gly Thr Ala Asn His Leu Glu Lys Val
```

42

                                260                           265                           270

cgg tac gcc aac aac agc ggt gtc aat gtg ctg gat ttt gat ctc aac        960
Arg Tyr Ala Asn Asn Ser Gly Val Asn Val Leu Asp Phe Asp Leu Asn
            275                   280                   285

acg gtg att cga aat gtg ttc ggc aca ttt acg caa acg atg tac gat        1008
Thr Val Ile Arg Asn Val Phe Gly Thr Phe Thr Gln Thr Met Tyr Asp
            290                   295                   300

ctt aac aat atg gtg aac caa acg ggg aac gag tac aaa tac aaa gaa        1056
Leu Asn Asn Met Val Asn Gln Thr Gly Asn Glu Tyr Lys Tyr Lys Glu
            305                   310                   315

aat cta atc aca ttt atc gat aac cat gat atg tca aga ttt ctt tcg        1104
Asn Leu Ile Thr Phe Ile Asp Asn His Asp Met Ser Arg Phe Leu Ser
320                   325                   330                   335

gta aat tcg aac aag gcg aat ttg cac cag gcg ctt gct ttc att ctc        1152
Val Asn Ser Asn Lys Ala Asn Leu His Gln Ala Leu Ala Phe Ile Leu
            340                   345                   350

act tcg cgg ggt acg ccc tcc atc tat tat gga acc gaa caa tac atg        1200
Thr Ser Arg Gly Thr Pro Ser Ile Tyr Tyr Gly Thr Glu Gln Tyr Met
            355                   360                   365

gca ggc ggc aat gac ccg tac aac cgg ggg atg atg ccg gcg ttt gat        1248
Ala Gly Gly Asn Asp Pro Tyr Asn Arg Gly Met Met Pro Ala Phe Asp
            370                   375                   380

acg aca acc acc gcc ttt aaa gag gtg tca act ctg gcg ggg ttg cgc        1296
Thr Thr Thr Thr Ala Phe Lys Glu Val Ser Thr Leu Ala Gly Leu Arg
            385                   390                   395

agg aac aat gcg gcg atc cag tac ggc acc acc acc cag cgt tgg atc        1344
Arg Asn Asn Ala Ala Ile Gln Tyr Gly Thr Thr Thr Gln Arg Trp Ile
400                   405                   410                   415

aac aat gat gtt tac att tat gaa cgg aaa ttt ttc aac gat gtc gtg        1392
Asn Asn Asp Val Tyr Ile Tyr Glu Arg Lys Phe Phe Asn Asp Val Val
            420                   425                   430

ttg gtg gcc atc aat cga aac acg caa tcc tcc tat tcg att tcc ggt        1440
Leu Val Ala Ile Asn Arg Asn Thr Gln Ser Ser Tyr Ser Ile Ser Gly
            435                   440                   445

ttg cag acg gcc ttg cca aat ggc agc tat gcg gat tat ctg tca ggg        1488
Leu Gln Thr Ala Leu Pro Asn Gly Ser Tyr Ala Asp Tyr Leu Ser Gly
            450                   455                   460

ctg ttg ggg ggg aac ggg att tcc gtt tcc aat gga agt gtc gct tcg        1536
Leu Leu Gly Gly Asn Gly Ile Ser Val Ser Asn Gly Ser Val Ala Ser
            465                   470                   475

ttc acg ctt gcg cct gga gcc gtg tct gtt tgg cag tac agc aca tcc        1584
Phe Thr Leu Ala Pro Gly Ala Val Ser Val Trp Gln Tyr Ser Thr Ser
480                   485                   490                   495

gct tca gcg ccg caa atc gga tcg gtt gct cca aat atg ggg att ccg        1632
Ala Ser Ala Pro Gln Ile Gly Ser Val Ala Pro Asn Met Gly Ile Pro
            500                   505                   510

```
ggt aat gtg gtc acg atc gac ggg aaa ggt ttt ggg acg acg cag gga      1680
Gly Asn Val Val Thr Ile Asp Gly Lys Gly Phe Gly Thr Thr Gln Gly
            515             520             525

acc gtg aca ttt ggc gga gtg aca gcg act gtg aaa tcc tgg aca tcc      1728
Thr Val Thr Phe Gly Gly Val Thr Ala Thr Val Lys Ser Trp Thr Ser
            530             535             540

aat cgg att gaa gtg tac gtt ccc aac atg gcc gcc ggg ctg acc gat      1776
Asn Arg Ile Glu Val Tyr Val Pro Asn Met Ala Ala Gly Leu Thr Asp
            545             550             555

gtg aaa gtc acc gcg ggt gga gtt tcc agc aat ctg tat tct tac aat      1824
Val Lys Val Thr Ala Gly Gly Val Ser Ser Asn Leu Tyr Ser Tyr Asn
560             565             570             575

att ttg agt gga acg cag aca tcg gtt gtg ttt act gtg aaa agt gcg      1872
Ile Leu Ser Gly Thr Gln Thr Ser Val Val Phe Thr Val Lys Ser Ala
            580             585             590

cct ccg acc aac ctg ggg gat aag att tac ctg acg ggc aac ata ccg      1920
Pro Pro Thr Asn Leu Gly Asp Lys Ile Tyr Leu Thr Gly Asn Ile Pro
            595             600             605

gaa ttg ggg aat tgg agc acg gat acg agc gga gcc gtt aac aat gcg      1968
Glu Leu Gly Asn Trp Ser Thr Asp Thr Ser Gly Ala Val Asn Asn Ala
            610             615             620

caa ggg ccc ctg ctc gcg ccc aat tat ccg gat tgg ttt tat gta ttc      2016
Gln Gly Pro Leu Leu Ala Pro Asn Tyr Pro Asp Trp Phe Tyr Val Phe
            625             630             635

agc gtt cca gca gga aag acg att caa ttc aag ttc ttc atc aag cgt      2064
Ser Val Pro Ala Gly Lys Thr Ile Gln Phe Lys Phe Phe Ile Lys Arg
640             645             650             655

gcg gat gga acg att caa tgg gag aat ggt tcg aac cac gtg gcc aca      2112
Ala Asp Gly Thr Ile Gln Trp Glu Asn Gly Ser Asn His Val Ala Thr
            660             665             670

act ccc acg ggt gca acc ggt aac att act gtt acg tgg caa aac tag      2160
Thr Pro Thr Gly Ala Thr Gly Asn Ile Thr Val Thr Trp Gln Asn
            675             680             685
```

<210> 9
<211> 719
<212> PRT
<213> Bacillus sp.

<400> 9

```
        Met Lys Lys Lys Thr Leu Ser Leu Phe Val Gly Leu Met Leu Leu Ile
                  -30             -25             -20


        Gly Leu Leu Phe Ser Gly Ser Leu Pro Tyr Asn Pro Asn Ala Ala Glu
                  -15             -10             -5
```

```
Ala Ser Ser Ser Ala Ser Val Lys Gly Asp Val Ile Tyr Gln Ile Ile
-1  1               5                   10                  15

Ile Asp Arg Phe Tyr Asp Gly Asp Thr Thr Asn Asn Asn Pro Ala Lys
                20              25                  30

Ser Tyr Gly Leu Tyr Asp Pro Thr Lys Ser Lys Trp Lys Met Tyr Trp
            35              40              45

Gly Gly Asp Leu Glu Gly Val Arg Gln Lys Leu Pro Tyr Leu Lys Gln
        50              55              60

Leu Gly Val Thr Thr Ile Trp Leu Ser Pro Val Leu Asp Asn Leu Asp
    65              70              75

Thr Leu Ala Gly Thr Asp Asn Thr Gly Tyr His Gly Tyr Trp Thr Arg
80              85              90                  95

Asp Phe Lys Gln Ile Glu Glu His Phe Gly Asn Trp Thr Thr Phe Asp
            100             105             110

Thr Leu Val Asn Asp Ala His Gln Asn Gly Ile Lys Val Ile Val Asp
        115             120                 125

Phe Val Pro Asn His Ser Thr Pro Phe Lys Ala Asn Asp Ser Thr Phe
        130             135             140

Ala Glu Gly Gly Ala Leu Tyr Asn Asn Gly Thr Tyr Met Gly Asn Tyr
    145             150             155

Phe Asp Asp Ala Thr Lys Gly Tyr Phe His His Asn Gly Asp Ile Ser
160             165             170             175

Asn Trp Asp Asp Arg Tyr Glu Ala Gln Trp Lys Asn Phe Thr Asp Pro
            180             185             190

Ala Gly Phe Ser Leu Ala Asp Leu Ser Gln Glu Asn Gly Thr Ile Ala
            195             200             205

Gln Tyr Leu Thr Asp Ala Ala Val Gln Leu Val Ala His Gly Ala Asp
        210             215             220

Gly Leu Arg Ile Asp Ala Val Lys His Phe Asn Ser Gly Phe Ser Lys
    225             230             235

Ser Leu Ala Asp Lys Leu Tyr Gln Lys Lys Asp Ile Phe Leu Val Gly
```

|  | 240 | | | | 245 | | | | 250 | | | | 255 |
|---|---|---|---|---|---|---|---|---|---|---|---|---|---|

Glu Trp Tyr Gly Asp Asp Pro Gly Thr Ala Asn His Leu Glu Lys Val
260 265 270

Arg Tyr Ala Asn Asn Ser Gly Val Asn Val Leu Asp Phe Asp Leu Asn
275 280 285

Thr Val Ile Arg Asn Val Phe Gly Thr Phe Thr Gln Thr Met Tyr Asp
290 295 300

Leu Asn Asn Met Val Asn Gln Thr Gly Asn Glu Tyr Lys Tyr Lys Glu
305 310 315

Asn Leu Ile Thr Phe Ile Asp Asn His Asp Met Ser Arg Phe Leu Ser
320 325 330 335

Val Asn Ser Asn Lys Ala Asn Leu His Gln Ala Leu Ala Phe Ile Leu
340 345 350

Thr Ser Arg Gly Thr Pro Ser Ile Tyr Tyr Gly Thr Glu Gln Tyr Met
355 360 365

Ala Gly Gly Asn Asp Pro Tyr Asn Arg Gly Met Met Pro Ala Phe Asp
370 375 380

Thr Thr Thr Thr Ala Phe Lys Glu Val Ser Thr Leu Ala Gly Leu Arg
385 390 395

Arg Asn Asn Ala Ala Ile Gln Tyr Gly Thr Thr Thr Gln Arg Trp Ile
400 405 410 415

Asn Asn Asp Val Tyr Ile Tyr Glu Arg Lys Phe Phe Asn Asp Val Val
420 425 430

Leu Val Ala Ile Asn Arg Asn Thr Gln Ser Ser Tyr Ser Ile Ser Gly
435 440 445

Leu Gln Thr Ala Leu Pro Asn Gly Ser Tyr Ala Asp Tyr Leu Ser Gly
450 455 460

Leu Leu Gly Gly Asn Gly Ile Ser Val Ser Asn Gly Ser Val Ala Ser
465 470 475

Phe Thr Leu Ala Pro Gly Ala Val Ser Val Trp Gln Tyr Ser Thr Ser
480 485 490 495

```
Ala Ser Ala Pro Gln Ile Gly Ser Val Ala Pro Asn Met Gly Ile Pro
                500                 505                 510

Gly Asn Val Val Thr Ile Asp Gly Lys Gly Phe Gly Thr Thr Gln Gly
                515                 520                 525

Thr Val Thr Phe Gly Gly Val Thr Ala Thr Val Lys Ser Trp Thr Ser
                530                 535                 540

Asn Arg Ile Glu Val Tyr Val Pro Asn Met Ala Ala Gly Leu Thr Asp
        545                 550                 555

Val Lys Val Thr Ala Gly Gly Val Ser Ser Asn Leu Tyr Ser Tyr Asn
560                 565                 570                 575

Ile Leu Ser Gly Thr Gln Thr Ser Val Val Phe Thr Val Lys Ser Ala
                580                 585                 590

Pro Pro Thr Asn Leu Gly Asp Lys Ile Tyr Leu Thr Gly Asn Ile Pro
                595                 600                 605

Glu Leu Gly Asn Trp Ser Thr Asp Thr Ser Gly Ala Val Asn Asn Ala
            610                 615                 620

Gln Gly Pro Leu Leu Ala Pro Asn Tyr Pro Asp Trp Phe Tyr Val Phe
        625                 630                 635

Ser Val Pro Ala Gly Lys Thr Ile Gln Phe Lys Phe Phe Ile Lys Arg
640                 645                 650                 655

Ala Asp Gly Thr Ile Gln Trp Glu Asn Gly Ser Asn His Val Ala Thr
                660                 665                 670

Thr Pro Thr Gly Ala Thr Gly Asn Ile Thr Val Thr Trp Gln Asn
                675                 680                 685
```

<210> 10
<211> 514
<212> PRT
<213> Bacillus stearothermophilus

<220>
<221> mat_peptide
<222> (1)..(514)

<400> 10

Ala Ala Pro Phe Asn Gly Thr Met Met Gln Tyr Phe Glu Trp Tyr Leu
1           5               10              15

Pro Asp Asp Gly Thr Leu Trp Thr Lys Val Ala Asn Glu Ala Asn Asn
            20              25              30

Leu Ser Ser Leu Gly Ile Thr Ala Leu Trp Leu Pro Pro Ala Tyr Lys
        35              40              45

Gly Thr Ser Arg Ser Asp Val Gly Tyr Gly Val Tyr Asp Leu Tyr Asp
    50              55              60

Leu Gly Glu Phe Asn Gln Lys Gly Ala Val Arg Thr Lys Tyr Gly Thr
65              70              75              80

Lys Ala Gln Tyr Leu Gln Ala Ile Gln Ala Ala His Ala Ala Gly Met
            85              90              95

Gln Val Tyr Ala Asp Val Val Phe Asp His Lys Gly Gly Ala Asp Gly
            100             105             110

Thr Glu Trp Val Asp Ala Val Glu Val Asn Pro Ser Asp Arg Asn Gln
        115             120             125

Glu Ile Ser Gly Thr Tyr Gln Ile Gln Ala Trp Thr Lys Phe Asp Phe
    130             135             140

Pro Gly Arg Gly Asn Thr Tyr Ser Ser Phe Lys Trp Arg Trp Tyr His
145             150             155             160

Phe Asp Gly Val Asp Trp Asp Glu Ser Arg Lys Leu Ser Arg Ile Tyr
            165             170             175

Lys Phe Arg Gly Ile Gly Lys Ala Trp Asp Trp Glu Val Asp Thr Glu
        180             185             190

Asn Gly Asn Tyr Asp Tyr Leu Met Tyr Ala Asp Leu Asp Met Asp His
        195             200             205

Pro Glu Val Val Thr Glu Leu Lys Ser Trp Gly Lys Trp Tyr Val Asn
    210             215             220

Thr Thr Asn Ile Asp Gly Phe Arg Leu Asp Ala Val Lys His Ile Lys
225             230             235             240

```
Phe Ser Phe Phe Pro Asp Trp Leu Ser Asp Val Arg Ser Gln Thr Gly
            245             250                 255

Lys Pro Leu Phe Thr Val Gly Glu Tyr Trp Ser Tyr Asp Ile Asn Lys
            260             265                 270

Leu His Asn Tyr Ile Met Lys Thr Asn Gly Thr Met Ser Leu Phe Asp
            275             280                 285

Ala Pro Leu His Asn Lys Phe Tyr Thr Ala Ser Lys Ser Gly Gly Thr
    290             295                 300

Phe Asp Met Arg Thr Leu Met Thr Asn Thr Leu Met Lys Asp Gln Pro
305             310                 315                 320

Thr Leu Ala Val Thr Phe Val Asp Asn His Asp Thr Glu Pro Gly Gln
            325             330                 335

Ala Leu Gln Ser Trp Val Asp Pro Trp Phe Lys Pro Leu Ala Tyr Ala
            340             345                 350

Phe Ile Leu Thr Arg Gln Glu Gly Tyr Pro Cys Val Phe Tyr Gly Asp
            355             360                 365

Tyr Tyr Gly Ile Pro Gln Tyr Asn Ile Pro Ser Leu Lys Ser Lys Ile
    370             375                 380

Asp Pro Leu Leu Ile Ala Arg Arg Asp Tyr Ala Tyr Gly Thr Gln His
385             390                 395                 400

Asp Tyr Leu Asp His Ser Asp Ile Ile Gly Trp Thr Arg Glu Gly Val
            405             410                 415

Thr Glu Lys Pro Gly Ser Gly Leu Ala Ala Leu Ile Thr Asp Gly Pro
            420             425                 430

Gly Gly Ser Lys Trp Met Tyr Val Gly Lys Gln His Ala Gly Lys Val
            435             440                 445

Phe Tyr Asp Leu Thr Gly Asn Arg Ser Asp Thr Val Thr Ile Asn Ser
    450             455                 460

Asp Gly Trp Gly Glu Phe Lys Val Asn Gly Gly Ser Val Ser Val Trp
465             470                 475                 480

Val Pro Arg Lys Thr Thr Val Ser Thr Ile Ala Trp Ser Ile Thr Thr
```

```
                    485                    490                        495


        Arg Pro Trp Thr Asp Glu Phe Val Arg Trp Thr Glu Pro Arg Leu Val
                    500                    505                    510


        Ala Trp

<210> 11
<211> 484
<212> PRT
<213> Aspergillus niger

<220>
<221> mat_peptide
<222> (1)..(484)

<400> 11


        Leu Ser Ala Ala Ser Trp Arg Thr Gln Ser Ile Tyr Phe Leu Leu Thr
        1               5                   10                  15


        Asp Arg Phe Gly Arg Thr Asp Asn Ser Thr Thr Ala Thr Cys Asn Thr
                    20                  25                  30


        Gly Asn Glu Ile Tyr Cys Gly Gly Ser Trp Gln Gly Ile Ile Asp His
                    35                  40                  45


        Leu Asp Tyr Ile Glu Gly Met Gly Phe Thr Ala Ile Trp Ile Ser Pro
                50                  55                  60


        Ile Thr Glu Gln Leu Pro Gln Asp Thr Ala Asp Gly Glu Ala Tyr His
        65                  70                  75                  80


        Gly Tyr Trp Gln Gln Lys Ile Tyr Asp Val Asn Ser Asn Phe Gly Thr
                            85                  90                  95


        Ala Asp Asn Leu Lys Ser Leu Ser Asp Ala Leu His Ala Arg Gly Met
                    100                 105                 110


        Tyr Leu Met Val Asp Val Val Pro Asp His Met Gly Tyr Ala Gly Asn
                    115                 120                 125


        Gly Asn Asp Val Asp Tyr Ser Val Phe Asp Pro Phe Asp Ser Ser Ser
                130                 135                 140


        Tyr Phe His Pro Tyr Cys Leu Ile Thr Asp Trp Asp Asn Leu Thr Met
        145                 150                 155                 160
```

```
Val Glu Asp Cys Trp Glu Gly Asp Thr Ile Val Ser Leu Pro Asp Leu
            165             170             175

Asp Thr Thr Glu Thr Ala Val Arg Thr Ile Trp Tyr Asp Trp Val Ala
            180             185             190

Asp Leu Val Ser Asn Tyr Ser Val Asp Gly Leu Arg Ile Asp Ser Val
            195             200             205

Leu Glu Val Gln Pro Asp Phe Phe Pro Gly Tyr Asn Lys Ala Ser Gly
    210             215             220

Val Tyr Cys Val Gly Glu Ile Asp Asn Gly Asn Pro Ala Ser Asp Cys
225             230             235             240

Pro Tyr Gln Lys Val Leu Asp Gly Val Leu Asn Tyr Pro Ile Tyr Trp
            245             250             255

Gln Leu Leu Tyr Ala Phe Glu Ser Ser Ser Gly Ser Ile Ser Asn Leu
            260             265             270

Tyr Asn Met Ile Lys Ser Val Ala Ser Asp Cys Ser Asp Pro Thr Leu
            275             280             285

Leu Gly Asn Phe Ile Glu Asn His Asp Asn Pro Arg Phe Ala Lys Tyr
    290             295             300

Thr Ser Asp Tyr Ser Gln Ala Lys Asn Val Leu Ser Tyr Ile Phe Leu
305             310             315             320

Ser Asp Gly Ile Pro Ile Val Tyr Ala Gly Glu Glu Gln His Tyr Ala
            325             330             335

Gly Gly Lys Val Pro Tyr Asn Arg Glu Ala Thr Trp Leu Ser Gly Tyr
            340             345             350

Asp Thr Ser Ala Glu Leu Tyr Thr Trp Ile Ala Thr Thr Asn Ala Ile
            355             360             365

Arg Lys Leu Ala Ile Ala Ala Asp Ser Ala Tyr Ile Thr Tyr Ala Asn
    370             375             380

Asp Ala Phe Tyr Thr Asp Ser Asn Thr Ile Ala Met Ala Lys Gly Thr
385             390             395             400
```

```
Ser Gly Ser Gln Val Ile Thr Val Leu Ser Asn Lys Gly Ser Ser Gly
            405                     410                 415

Ser Ser Tyr Thr Leu Thr Leu Ser Gly Ser Gly Tyr Thr Ser Gly Thr
            420                     425                 430

Lys Leu Ile Glu Ala Tyr Thr Cys Thr Ser Val Thr Val Asp Ser Ser
            435                     440                 445

Gly Asp Ile Pro Val Pro Met Ala Ser Gly Leu Pro Arg Val Leu Leu
    450                     455                 460

Pro Ala Ser Val Val Asp Ser Ser Ser Leu Cys Gly Gly Ser Gly Arg
465                     470                 475                 480

Leu Tyr Val Glu
```

<210> 12
<211> 435
<212> PRT
<213> Humicola insolens

<220>
<221> mat_peptide
<222> (1)..(435)

<400> 12

```
Met Ala Arg Gly Thr Ala Leu Leu Gly Leu Thr Ala Leu Leu Leu Gly
1               5                   10                  15

Leu Val Asn Gly Gln Lys Pro Gly Glu Thr Lys Glu Val His Pro Gln
            20                  25                  30

Leu Thr Thr Phe Arg Cys Thr Lys Arg Gly Gly Cys Lys Pro Ala Thr
            35                  40                  45

Asn Phe Ile Val Leu Asp Ser Leu Ser His Pro Ile His Arg Ala Glu
    50                  55                  60

Gly Leu Gly Pro Gly Gly Cys Gly Asp Trp Gly Asn Pro Pro Pro Lys
65                  70                  75                  80

Asp Val Cys Pro Asp Val Glu Ser Cys Ala Lys Asn Cys Ile Met Glu
                85                  90                  95
```

```
Gly Ile Pro Asp Tyr Ser Gln Tyr Gly Val Thr Thr Asn Gly Thr Ser
            100                 105                 110

Leu Arg Leu Gln His Ile Leu Pro Asp Gly Arg Val Pro Ser Pro Arg
            115                 120                 125

Val Tyr Leu Leu Asp Lys Thr Lys Arg Arg Tyr Glu Met Leu His Leu
            130                 135                 140

Thr Gly Phe Glu Phe Thr Phe Asp Val Asp Ala Thr Lys Leu Pro Cys
145                 150                 155                 160

Gly Met Asn Ser Ala Leu Tyr Leu Ser Glu Met His Pro Thr Gly Ala
                165                 170                 175

Lys Ser Lys Tyr Asn Ser Gly Gly Ala Tyr Tyr Gly Thr Gly Tyr Cys
                180                 185                 190

Asp Ala Gln Cys Phe Val Thr Pro Phe Ile Asn Gly Leu Gly Asn Ile
                195                 200                 205

Glu Gly Lys Gly Ser Cys Cys Asn Glu Met Asp Ile Trp Glu Val Asn
            210                 215                 220

Ser Arg Ala Ser His Val Val Pro His Thr Cys Asn Lys Lys Gly Leu
225                 230                 235                 240

Tyr Leu Cys Glu Gly Glu Glu Cys Ala Phe Glu Gly Val Cys Asp Lys
                245                 250                 255

Asn Gly Cys Gly Trp Asn Asn Tyr Arg Val Asn Val Thr Asp Tyr Tyr
                260                 265                 270

Gly Arg Gly Glu Glu Phe Lys Val Asn Thr Leu Lys Pro Phe Thr Val
                275                 280                 285

Val Thr Gln Phe Leu Ala Asn Arg Arg Gly Lys Leu Glu Lys Ile His
            290                 295                 300

Arg Phe Tyr Val Gln Asp Gly Lys Val Ile Glu Ser Phe Tyr Thr Asn
305                 310                 315                 320

Lys Glu Gly Val Pro Tyr Thr Asn Met Ile Asp Asp Glu Phe Cys Glu
                325                 330                 335

Ala Thr Gly Ser Arg Lys Tyr Met Glu Leu Gly Ala Thr Gln Gly Met
```

340            345            350

```
Gly Glu Ala Leu Thr Arg Gly Met Val Leu Ala Met Ser Ile Trp Trp
        355                 360             365

Asp Gln Gly Gly Asn Met Glu Trp Leu Asp His Gly Glu Ala Gly Pro
    370                 375             380

Cys Ala Lys Gly Glu Gly Ala Pro Ser Asn Ile Val Gln Val Glu Pro
385             390             395                     400

Phe Pro Glu Val Thr Tyr Thr Asn Leu Arg Trp Gly Glu Ile Gly Ser
            405                 410                 415

Thr Tyr Gln Glu Val Gln Lys Pro Lys Pro Lys Pro Gly His Gly Pro
        420                 425             430

Arg Ser Asp
        435
```

<210> 13
<211> 1008
<212> DNA
<213> Thermoascus aurantiacus

<220>
<221> CDS
<222> (1)..(1005)

<220>
<221> sig_peptide
<222> (1)..(90)

<220>
<221> mat_peptide
<222> (91)..(1005)

<400> 13

```
atg aag ctc ggc tct ctc gtg ctc gct ctc agc gca gct agg ctt aca          48
Met Lys Leu Gly Ser Leu Val Leu Ala Leu Ser Ala Ala Arg Leu Thr
-30                 -25                 -20                 -15

ctg tcg gcc cct ctc gca gac aga aag cag gag acc aag cgt gcg aaa          96
Leu Ser Ala Pro Leu Ala Asp Arg Lys Gln Glu Thr Lys Arg Ala Lys
                -10                 -5                  -1  1

gta ttc caa tgg ttc ggt tcg aac gag tcc ggt gct gaa ttc gga agc        144
Val Phe Gln Trp Phe Gly Ser Asn Glu Ser Gly Ala Glu Phe Gly Ser
        5                   10                  15

cag aac ctt cca gga gtc gag gga aag gat tat ata tgg cct gat ccc        192
Gln Asn Leu Pro Gly Val Glu Gly Lys Asp Tyr Ile Trp Pro Asp Pro
        20                  25                  30
```

```
aac acc att gac aca ttg atc agc aag ggg atg aac atc ttt cgt gtc    240
Asn Thr Ile Asp Thr Leu Ile Ser Lys Gly Met Asn Ile Phe Arg Val
35              40              45                      50

ccc ttt atg atg gag aga ttg gtt ccc aac tca atg acc ggc tct ccg    288
Pro Phe Met Met Glu Arg Leu Val Pro Asn Ser Met Thr Gly Ser Pro
                    55              60                  65

gat ccg aac tac ctg gca gat ctc ata gcg act gta aat gca atc acc    336
Asp Pro Asn Tyr Leu Ala Asp Leu Ile Ala Thr Val Asn Ala Ile Thr
                70              75              80

cag aaa ggt gcc tac gcc gtc gtc gat cct cat aac tac ggc aga tac    384
Gln Lys Gly Ala Tyr Ala Val Val Asp Pro His Asn Tyr Gly Arg Tyr
            85              90              95

tac aat tct ata atc tcg agc cct tcc gat ttc cag acc ttc tgg aaa    432
Tyr Asn Ser Ile Ile Ser Ser Pro Ser Asp Phe Gln Thr Phe Trp Lys
        100             105             110

acg gtc gcc tca cag ttt gct tcg aat cca ctg gtc atc ttc gac act    480
Thr Val Ala Ser Gln Phe Ala Ser Asn Pro Leu Val Ile Phe Asp Thr
115             120             125             130

aat aac gaa tac cac gat atg gac cag acc tta gtc ctc aat ctc aac    528
Asn Asn Glu Tyr His Asp Met Asp Gln Thr Leu Val Leu Asn Leu Asn
                135             140             145

cag gcc gct atc gac ggc atc cgt tcc gcc gga gcc act tcc cag tac    576
Gln Ala Ala Ile Asp Gly Ile Arg Ser Ala Gly Ala Thr Ser Gln Tyr
            150             155             160

atc ttt gtc gag ggc aat tcg tgg acc ggg gca tgg acc tgg acg aac    624
Ile Phe Val Glu Gly Asn Ser Trp Thr Gly Ala Trp Thr Trp Thr Asn
            165             170             175

gtg aac gat aac atg aaa agc ctg acc gac cca tct gac aag atc ata    672
Val Asn Asp Asn Met Lys Ser Leu Thr Asp Pro Ser Asp Lys Ile Ile
        180             185             190

tac gag atg cac cag tac ctg gac tct gac gga tcc ggg aca tca gcg    720
Tyr Glu Met His Gln Tyr Leu Asp Ser Asp Gly Ser Gly Thr Ser Ala
195                 200             205             210

acc tgc gta tct tcg acc atc ggt caa gag cga atc acc agc gca acg    768
Thr Cys Val Ser Ser Thr Ile Gly Gln Glu Arg Ile Thr Ser Ala Thr
            215             220             225

cag tgg ctc agg gcc aac ggg aag aag ggc atc atc ggc gag ttt gcg    816
Gln Trp Leu Arg Ala Asn Gly Lys Lys Gly Ile Ile Gly Glu Phe Ala
            230             235             240

ggc gga gcc aac gac gtc tgc gag acg gcc atc acg ggc atg ctg gac    864
Gly Gly Ala Asn Asp Val Cys Glu Thr Ala Ile Thr Gly Met Leu Asp
            245             250             255

tac atg gcc cag aac aca gac gtc tgg act ggc gcc atc tgg tgg gcg    912
Tyr Met Ala Gln Asn Thr Asp Val Trp Thr Gly Ala Ile Trp Trp Ala
        260             265             270
```

```
gcc ggg ccg tgg tgg gga gac tac ata ttc tcc atg gag ccg gac aat      960
Ala Gly Pro Trp Trp Gly Asp Tyr Ile Phe Ser Met Glu Pro Asp Asn
275             280             285             290

ggc atc gcg tat cag cag ata ctt cct att ttg act ccg tat ctt tga     1008
Gly Ile Ala Tyr Gln Gln Ile Leu Pro Ile Leu Thr Pro Tyr Leu
            295             300             305
```

<210> 14
<211> 335
<212> PRT
<213> Thermoascus aurantiacus

<400> 14

```
Met Lys Leu Gly Ser Leu Val Leu Ala Leu Ser Ala Ala Arg Leu Thr
-30             -25             -20             -15

Leu Ser Ala Pro Leu Ala Asp Arg Lys Gln Glu Thr Lys Arg Ala Lys
            -10              -5              -1  1

Val Phe Gln Trp Phe Gly Ser Asn Glu Ser Gly Ala Glu Phe Gly Ser
        5               10              15

Gln Asn Leu Pro Gly Val Glu Gly Lys Asp Tyr Ile Trp Pro Asp Pro
    20              25              30

Asn Thr Ile Asp Thr Leu Ile Ser Lys Gly Met Asn Ile Phe Arg Val
35              40              45                  50

Pro Phe Met Met Glu Arg Leu Val Pro Asn Ser Met Thr Gly Ser Pro
            55              60                  65

Asp Pro Asn Tyr Leu Ala Asp Leu Ile Ala Thr Val Asn Ala Ile Thr
        70              75              80

Gln Lys Gly Ala Tyr Ala Val Val Asp Pro His Asn Tyr Gly Arg Tyr
        85              90              95

Tyr Asn Ser Ile Ile Ser Ser Pro Ser Asp Phe Gln Thr Phe Trp Lys
    100             105             110

Thr Val Ala Ser Gln Phe Ala Ser Asn Pro Leu Val Ile Phe Asp Thr
115             120             125             130

Asn Asn Glu Tyr His Asp Met Asp Gln Thr Leu Val Leu Asn Leu Asn
                135             140             145

Gln Ala Ala Ile Asp Gly Ile Arg Ser Ala Gly Ala Thr Ser Gln Tyr
```

EP 2 222 830 B1

```
              150                    155                         160

        Ile Phe Val Glu Gly Asn Ser Trp Thr Gly Ala Trp Thr Trp Thr Asn
                    165                 170                 175

        Val Asn Asp Asn Met Lys Ser Leu Thr Asp Pro Ser Asp Lys Ile Ile
            180                 185                 190

        Tyr Glu Met His Gln Tyr Leu Asp Ser Asp Gly Ser Gly Thr Ser Ala
        195                 200                 205                 210

        Thr Cys Val Ser Ser Thr Ile Gly Gln Glu Arg Ile Thr Ser Ala Thr
                    215                 220                 225

        Gln Trp Leu Arg Ala Asn Gly Lys Lys Gly Ile Ile Gly Glu Phe Ala
                    230                 235                 240

        Gly Gly Ala Asn Asp Val Cys Glu Thr Ala Ile Thr Gly Met Leu Asp
                    245                 250                 255

        Tyr Met Ala Gln Asn Thr Asp Val Trp Thr Gly Ala Ile Trp Trp Ala
                    260                 265                 270

        Ala Gly Pro Trp Trp Gly Asp Tyr Ile Phe Ser Met Glu Pro Asp Asn
        275                 280                 285                 290

        Gly Ile Ala Tyr Gln Gln Ile Leu Pro Ile Leu Thr Pro Tyr Leu
                    295                 300                 305
```

**Description**

**REFERENCE TO A SEQUENCE LISTING**

This application contains a Sequence Listing in computer readable form. The computer readable form is incorporated herein by reference.

**FIELD OF THE INVENTION**

The present invention relates to an improved mashing process for production of a brewer's wort and for production of a beer.

**BACKGROUND OF THE INVENTION**

In modern mashing processes, enzymes are often added as a supplement when mashing malt is low in enzymes or to allow use of all adjunct grists. Enzymes may also be applied in mashing of well modified malts with high enzyme content in order to increase the extract recovery as well as the amount of fermentable sugars. It is thus well known to apply debranching enzymes, *e.g.,* isoamylase or pullulanase to increase the yield of fermentable sugars. Debranching enzymes may be applied in processes for production of low calorie beer. Such processes are the subject of Willox et al. (MBAA Technical Quarterly, 1977, 14: 105), U.S. Patent Nos. 4,528,198, 4,666,718, and 4,318,927, and GB 2056484 and GB 2069527, and US 4,355,047.

**SUMMARY OF THE INVENTION**

The present inventors have now surprisingly discovered that by using a certain pullulanase, mashing can be achieved using a smaller amount of enzyme protein.
Accordingly, in a first aspect the invention provides a process for producing a brewers wort comprising forming a mash from a grist, and contacting said mash with a pullulanase (E.C. 3.2.1.41), wherein said pullulanase has an amino acid sequence which a) is at least 98% identical to the amino acid sequence shown in SEQ ID NO: 4.
In a further aspect the invention provides a composition suitable for use in the process of the first aspect, said composition comprising pullulanase (E.C. 3.2.1.41), glucoamylase and optionally alpha-amylase, wherein the pullulanase has an amino acid sequence which a) is at least 98% identical to the amino acid sequence shown in SEQ ID NO: 4.

**DETAILED DESCRIPTION OF THE INVENTION**

Brewing processes are well-known in the art, and generally involve the steps of malting, mashing, and fermentation. Mashing is the process of converting starch from the milled barley malt and solid adjuncts into fermentable and unfermentable sugars to produce wort of the desired composition. Traditional mashing involves mixing milled barley malt and adjuncts with water at a set temperature and volume to continue the biochemical changes initiated during the malting process. The mashing process is conducted over a period of time at various temperatures in order to activate the endogenous enzymes responsible for the degradation of proteins and carbohydrates. By far the most important change brought about in mashing is the conversion of starch molecules into fermentable sugars. The principal enzymes responsible for starch conversion in a traditional mashing process are alpha- and beta-amylases. Alpha-amylase very rapidly reduces insoluble and soluble starch by splitting starch molecules into many shorter chains that can be attacked by beta-amylase. The disaccharide produced is maltose. In addition to the maltose formed during mashing short branched glucose oligomers are produced. The short branched glucose oligomers are non fermentable sugars and add to the taste as well as the amount of calories of the finished beer.
After mashing, when all the starch has been broken down, it is necessary to separate the liquid extract (the wort) from the solids (spent grains). Wort separation, lautering, is important because the solids contain large amounts of protein, poorly modified starch, fatty material, silicates, and polyphenols (tannins). Following the separation of the wort from the spent grains the wort may be fermented with brewers yeast to produce a beer.
Further information on conventional brewing processes may be found in "Technology Brewing and Malting" by Wolfgang Kunze of the Research and Teaching Institute of Brewing, Berlin (VLB), 2nd revised Edition 1999, ISBN 3-921690-39-0.
The short branched glucose oligomers formed during mashing may be further hydrolyzed by addition of exogenous enzymes (enzymes added in addition to the malt). Debranching enzymes such as pullulanase and isoamylase hydrolyze the branching alpha-1-6 glucosidic bonds in these oligomers, thereby releasing glucose or maltose and straight-chained oligomers which are subject to the action of endogenous (malt derived) and/or exogenous enzymes, *e.g.*, alpha-amylases, beta-amylases and glucoamylases.

The present invention provides a new process suitable for producing a wort that is low in non-fermentable sugars. The process applies an expressly selected pullulanase activity.

**Definitions**

Throughout this disclosure, various terms that are generally understood by those of ordinary skill in the arts, are used. Several terms are used with specific meaning, as defined below.

As used herein the term **"grist"** is understood as the starch or sugar containing material that is the basis for beer production, *e.g.*, the barley malt and the adjunct. Generally, the grist does not contain any added water.

The term **"malt"** is understood as any malted cereal grain, in particular barley.

The term **"adjunct"** is understood as the part of the grist which is not barley malt. The adjunct may comprise any starch rich plant material, *e.g.*, unmalted grain, such as barley, rice, corn, wheat, rye, sorghum and readily fermentable sugar and/or syrup.

The term **"mash"** is understood as a starch containing slurry comprising grist steeped in water.

The term "**wort"** is understood as the unfermented liquor run-off following extracting the grist during mashing.

The term **"spent grains"** is understood as the drained solids remaining when the grist has been extracted and the wort separated.

The term **"beer"** is understood as fermented wort, *i.e.,* an alcoholic beverage brewed from barley malt, optionally adjunct and hops.

The term **"homologous sequence"** is used to characterize a sequence having an amino acid sequence that is at least 70%, preferably at least 75%, or at least 80%, or at least 85%, or 90%, or at least 95%, at least 96%, at least 97%, at least 98% at least 99% or even at least 100% identical to a known sequence. The relevant part of the amino acid sequence for the homology determination is the mature polypeptide, *i.e.*, without the signal peptide. The term **"homologous sequence"** is also used to characterize DNA sequences which hybridize at low stringency, medium stringency, medium/high stringency, high stringency, or even very high stringency with a known sequence. Suitable experimental conditions for determining hybridization at low, medium, or high stringency between a nucleotide probe and a homologous DNA or RNA sequence involves presoaking of the filter containing the DNA fragments or RNA to hybridize in 5 x SSC (Sodium chloride/Sodium citrate, Sambrook et al., 1989) for 10 min, and prehybridization of the filter in a solution of 5 x SSC, 5 x Denhardt's solution (Sambrook et al., 1989), 0.5% SDS and 100 micrograms/ml of denatured sonicated salmon sperm DNA (Sambrook et al., 1989), followed by hybridization in the same solution containing a concentration of 10ng/ml of a random-primed (Feinberg and Vogelstein, 1983, Anal. Biochem. 132:6-13), 32P-dCTP-labeled (specific activity > 1 x 109 cpm/microgram) probe for 12 hours at about 45°C. The filter is then washed twice for 30 minutes in 2 x SSC, 0.5% SDS at about 55°C (low stringency), more preferably at about 60°C (medium stringency), still more preferably at about 65°C (medium/high stringency), even more preferably at about 70°C (high stringency), and even more preferably at about 75°C (very high stringency). Molecules to which the oligonucleotide probe hybridizes under these conditions are detected using an x-ray film.

The term **"identity"** when used about polypeptide or DNA sequences and referred to in this disclosure is understood as the degree of identity between two sequences indicating a derivation of the first sequence from the second. The identity may suitably be determined by means of computer programs known in the art such as GAP provided in the GCG program package (Program Manual for the Wisconsin Package, Version 8, August 1994, Genetics Computer Group, 575 Science Drive, Madison, Wisconsin, USA 53711) (Needleman and Wunsch, 1970, Journal of Molecular Biology 48: 443-453. The following settings for polypeptide sequence comparison are used: GAP creation penalty of 3.0 and GAP extension penalty of 0.1. The degree of identity between an amino acid sequence of the present invention and a different amino acid sequence ("foreign sequence") is calculated as the number of exact matches in an alignment of the two sequences, divided by the length of the "invention sequence" or the length of the "foreign sequence", whichever is the shortest. The result is expressed in percent identity.

**Wort production**

In accordance with the first aspect the invention provides a process for producing a brewer's wort comprising forming a mash from a grist, and contacting said mash with a pullulanase (E.C. 3.2.1.41), wherein said pullulanase has an amino acid sequence which is at least 98% or even at least 99% identical to the amino acid sequence shown in SEQ ID NO: 4.

The grist of the first aspect comprises starch containing malted grain and/or adjunct. The grist may preferably comprise from 0% to 100%, preferably from 20% to 100%, preferably from 30% to 100%, more preferably from 40% to 100%, even more preferably from 50% to 100%, yet more preferably from 60% to 100%, such as from 80% to 100% or even most preferably from 90% to 100% adjunct, unmalted grain and/or unmalted barley. In a particular embodiment the adjunct is composed of 100% unmalted barley. Furthermore, the grist preferably comprises from 0% to 100%, preferably from 20% to 100%, preferably from 30% to 100%, more preferably from 40% to 100%, even more preferably from 50% to 100%, yet more preferably from 60% to 100%, or most preferably from 70% to 100%, or even most preferably from 90% to 100% malted grain and/or malted barley. In a particular embodiment the grist comprises approximately 50% malted grain, *e.g.,* malted barley, and approximately 50% adjunct, *e.g.,* unmalted grain, such as unmelted barley.

Malted grain used in the process of the first aspect may comprise any malted grain, and preferably malted grain selected from malted barley, wheat, rye, sorghum, millet, corn, and rice, and most preferably malted barley.

The adjunct used in the process of the first aspect may be obtained from tubers, roots, stems, leaves, legumes, cereals and/or whole grain. The adjunct may comprise raw and/or refined starch and/or sugar containing material derived from plants like wheat, rye, oat, corn, rice, milo, millet, sorghum, potato, sweet potato, cassava, tapioca, sago, banana, sugar beet and/or sugar cane. Preferably, the adjunct comprises unmalted grain, *e.g.,* unmalted grain selected from the list consisting of barley, wheat, rye, sorghum, millet, corn, and rice, and most preferably unmalted barley. Adjunct comprising readily fermentable carbohydrates such as sugars or syrups may be added to the barley malt mash before, during or after mashing process of the invention but is preferably added after the mashing process.

According to the invention, a pullulanase (E.C. 3.2.1.41) enzyme having at least 98% identity to the amino acid sequence of SEQ ID NO. 4, is exogenously supplied and present in the mash. The pullulanase may be added to the mash ingredients, *e.g.,* the water and/or the grist before, during or after forming the mash. In a particularly preferred embodiment an alpha-amylase (E.C. 3.2.1.1) and/or a glucoamylase (E.C. 3.2.1.3), is added and present in the mash together with the pullulanase.

In another preferred embodiment, a further enzyme is added to the mash, said enzyme being selected from the group consisting of cellulose, isoamylase, protease, xylanase.

During the mashing process, starch extracted from the grist is gradually hydrolyzed into fermentable sugars and smaller dextrins. Preferably, the mash is starch negative to iodine testing, before extracting the wort.

The mashing process generally applies a controlled stepwise increase in temperature, where each step favors one enzymatic action over the other, eventually degrading proteins, cell walls and starch. Mashing temperature profiles are generally known in the art. In the present invention the saccharification (starch degradation) step in the mashing process is preferably performed between 60°C and 66°C, more preferably between 61°C and 65°C, even more preferably between 62°C and 64°C, and most preferably between 63°C and 64°C. In a particular embodiment of the present invention the saccharification temperature is 64°C.

Obtaining the wort from the mash typically includes straining the wort from the spent grains, *i.e.,* the insoluble grain and husk material forming part of grist. Hot water may be run through the spent grains to rinse out, or sparge, any remaining extract from the grist. The application of a thermostable cellulase in the process of the present invention results in efficient reduction of beta-glucan level facilitating wort straining thus ensuring reduced cycle time and high extract recovery. Preferably the extract recovery is at least 80%, preferably at least 81%, more preferably at least 82%, even more preferably at least 83%, such as at least 84%, at least 85%, at least 86%, at least 87%, at least 88%, at least 89%, at least 90%, and most preferably at least 91%.

Following the separation of the wort from the spent grains of the grist of any of the aforementioned embodiments of the first aspect, the wort may be used as it is or it may be dewatered to provide a concentrated and/or dried wort. The concentrated and/or dried wort may be used as brewing extract, as malt extract flavoring, for non-alcoholic malt beverages, malt vinegar, breakfast cereals, for confectionary etc.

In a preferred embodiment, the wort is fermented to produce an alcoholic beverage, preferably a beer, *e.g.,* ale, strong ale, bitter, stout, porter, lager, export beer, malt liquor, barley wine, happoushu, high-alcohol beer, low-alcohol beer, low-calorie beer or light beer. Fermentation of the wort may include pitching the wort with a yeast slurry comprising fresh yeast, *i.e.,* yeast not previously used for the invention or the yeast may be recycled yeast. The yeast applied may be any yeast suitable for beer brewing, especially yeasts selected from *Saccharomyces* spp. such as *S. cerevisiae* and *S. uvarum,* including natural or artificially produced variants of these organisms. The methods for fermentation of wort for production of beer are well known to the person skilled in the arts.

The process of the invention may include adding silica hydrogel to the fermented wort to increase the colloidal stability of the beer. The processes may further include adding kieselguhr to the fermented wort and filtering to render the beer bright.

Further disclosed is beer produced from the wort of the second or third aspect, such as a beer produced by fermenting the wort to produce a beer. The beer may be any type of beer, *e.g.,* ales, strong ales, stouts, porters, lagers, bitters, export beers, malt liquors, happoushu, high-alcohol beer, low-alcohol beer, low-calorie beer or light beer.

Enzymes

The enzymes to be applied in the present invention should be selected for their ability to retain sufficient activity at the process temperature of the processes of the invention, as well as under the pH regime in the mash and should be added in effective amounts. The enzymes may be derived from any source, preferably from a plant or an alga, and more preferably from a microorganism, such as from a bacterium or a fungus.

Pullulanase (E.C. 3.2.1.41)

A preferred pullulanase enzyme to be used in the processes and/or compositions of the invention is a pullulanase having an amino acid sequence which is at least 98% or even 100% identical to the sequence shown in SEQ ID NO: 4; ion particular when aligned using the Program Needle using Matrix: BLOSUM62; Gap initiation penalty: 10.0; Gap extension penalty: 0.5; Gapless Identity Matrix.

Most preferably the pullulanase is derived from *Bacillus acidopullulyticus.* The pullulanase may have the amino acid sequence disclosed by Kelly et al., 1994 (FEMS Microbiol. Letters 115: 97-106) (SEQ ID NO: 6).

Isoamylase (E.C. 3.2.1.68)

Another enzyme applied in the processes and/or compositions of the invention may be an alternative debranching enzyme, such as an isoamylase (E.C. 3.2.1.68). Isoamylase hydrolyzes alpha-1,6-D-glucosidic branch linkages in amylopectin and beta-limit dextrins and can be distinguished from pullulanases by the inability of isoamylase to attack pullolan, and by the limited action on alpha-limit dextrins. Isoamylase may be added in effective amounts well known to the person skilled in the art. Isoamylase may be added alone or together with a pullulanases.

Alpha-amylase (EC 3.2.1.1)

A particular alpha-amylase enzyme to be used in the processes and/or compositions of the invention may be a *Bacillus* alpha-amylase. Well-known *Bacillus* alpha-amylases include alpha-amylase derived from a strain of *B. licheniformis, B. amyloliquefaciens,* and B. *stearothermophilus.* In the context of the present invention, a contemplated *Bacillus* alpha-amylase is an alpha-amylase as defined in WO 99/19467 on page 3, line 18 to page 6, line 27. A preferred alpha-amylase has an amino acid sequence having at least 90% identity to SEQ ID NO: 4 in WO 99/19467 (herein disclosed as SEQ ID NO: 7), such as at least 92%, at least 95%, at least 96%, at least 97%, at least 98%, or particularly at least 99%. Most preferred maltogenic alpha-amylase is SEQ ID NO: 9 or comprise the variants thereof disclosed in WO 99/43794. Contemplated variants and hybrids are described in WO 96/23874, WO 97/41213, and WO 99/19467. Specifically contemplated is an alpha-amylase (E.C. 3.2.1.1) from B. *stearothermophilus* having the amino acid sequence disclosed as SEQ ID NO: 3 in WO 99/19467 (herein disclosed as SEQ ID NO: 10) with the mutations: I181* + G182* + N193F.

*Bacillus* alpha-amylases may be added in the amounts of 1.0-1000 NU/kg DS, preferably from 2.0-500 NU/kg DS, preferably 10-200 NU/kg DS.

Another particular alpha-amylase to be used in the processes of the invention may be any fungal alpha-amylase, *e.g.,* an alpha-amylase derived from a species within *Aspergillus,* and preferably from a strain of *Aspergillus niger.* Especially contemplated are fungal alpha-amylases which exhibit a high identity, *i.e.,* at least 50%, at least 55%, at least 60%, at least 65%, at least 70%, at least 75%, at least 80%, at least 85% or even at least 90% identity to the amino acid sequences shown SEQ ID NO: 1 in WO 2002/038787 (herein disclosed as SEQ ID NO: 11). Fungal alpha-amylases may be added in an amount of 1-1000 AFAU/kg DS, preferably from 2-500 AFAU/kg DS, preferably 20-100 AFAU/kg DS.

Glucoamylases (E.C.3.2.1.3)

A further particular enzyme to be used in the processes and/or compositions of the invention may be a glucoamylase (E.C.3.2.1.3) derived from a microorganism or a plant. Preferred are glucoamylases of fungal or bacterial origin selected from the group consisting of *Aspergillus* glucoamylases, in particular *A. niger* G1 or G2 glucoamylase (Boel et al., 1984, EMBO J. 3(5): 1097-1102), or variants thereof, such as disclosed in WO 92/00381 and WO 00/04136; the *A. awamori* glucoamylase (WO 84/02921), *A. oryzae (*Agric. Biol. Chem., 1991, 55(4): 941-949), or variants or fragments thereof.

Other contemplated glucoamylases include *Talaromyces* glucoamylases, in particular derived from *Talaromyces emersonii* (WO 99/28448), *Talaromyces leycettanus* (U.S. Patent No. Re. 32,153), *Talaromyces duponti,* and *Talaromyces thermophilus* (U.S. Patent No. 4,587,215). Preferred glucoamylases include the glucoamylases derived from *Aspergillus oryzae,* such as a glucoamylase having at least 90%, at least 92%, at least 95%, at least 96%, at least 97%, at least 98%, or particularly at least 99% or even at least 90% identity to the amino acid sequence shown in SEQ ID NO:2 in WO00/04136. Other preferred glucoamylases include the glucoamylases derived from *Talaromyces emersonii* such as a glucoamylase having at least 90%, at least 92%, at least 95%, at least 96%, at least 97%, at least 98%, or particularly at least 99% or even at least 90% identity to the amino acid sequence of *Talaromyces emersonii* (WO 99/28448).

Bacterial glucoamylases contemplated include glucoamylases from the genus *Clostridium,* in particular *C. thermoamylolyticum* (EP 135,138), and *C. thermohydrosulfuricum* (WO 86/01831).

Also contemplated are the commercial products AMG 200L; AMG 300 L; SAN™ SUPER and AMG™ E (from Novozymes); OPTIDEX™ 300 (from Genencor Int.); AMIGASE™ and AMIGASE™ PLUS (from DSM); G-ZYME™ G900 (from Enzyme Bio-Systems); G-ZYME™ G990 ZR (*A. niger* glucoamylase and low protease content). Glucoamylases may be added in effective amounts well known to the person skilled in the art.

Protease

Suitable proteases include microbial proteases, such as fungal and bacterial proteases. Preferred proteases are acidic proteases, *i.e.,* proteases characterized by the ability to hydrolyze proteins under acidic conditions below pH 7.

The proteases are responsible for reducing the overall length of high-molecular-weight proteins to low-molecular-weight proteins in the mash. The low-molecular-weight proteins are a necessity for yeast nutrition and the high-molecular-weight-proteins ensure foam stability. Thus it is well-known to the skilled person that protease should be added in a balanced amount which at the same time allows amble free amino acids for the yeast and leaves enough high-molecular-weight-proteins to stabilize the foam. Proteases may be added in the amounts of 0.1-1000 AU/kg DS, preferably 1-100 AU/kg DS and most preferably 5-25 AU/kg DS.

Cellulase (E.C. 3.2.1.4)

The cellulase may be of microbial origin, such as derivable from a strain of a filamentous fungus (*e.g., Aspergillus, Trichoderma, Humicola, Fusarium*). Specific examples of cellulases include the endoglucanase (endoglucanase I) obtainable from *H. insoles* and further defined by the amino acid sequence of fig. 14 in WO 91/17244 (herein disclosed as SEQ ID NO: 12) and the 43 kD *H. insolens* endoglucanase described in WO 91/17243.

A particular cellulase to be used in the processes of the invention may be an endo-glucanase, such as an endo-1,4-beta-glucanase. Especially contemplated is the beta-glucanase shown in SEQ.ID.NO: 2 in WO 2003/062409 (herein disclosed as SEQ ID NO: 14) and homologous sequences. Commercially available cellulase preparations which may be used include CELLUCLAST®, CELLUZYME®, CEREFLO® and ULTRAFLO® (available from Novozymes A/S), LAMINEX™ and SPEZYME® CP (available from Genencor Int.) and ROHAMENT® 7069 W (available from Röhm, Germany).

Beta-glucanases may be added in the amounts of 1.0-10000 BGU/kg DS, preferably from 10-5000 BGU/kg DS, preferably from 50-1000 BGU/kg DS and most preferably from 100-500 BGU/kg DS.

**MATERIALS AND METHODS**

Enzymes

Pullulanase 1 derived from *Bacillus acidopullulyticus* and having the sequence showed in SEQ ID NO: 1. Pullulanase 1 is available from Novozymes as Promozyme 400L.

Pullulanase 2 derived from *Bacillus deramificans* (U.S. Patent No. 5,736,375) and having the sequence showed in SEQ ID NO: 2. Pullulanase 2 is available from Novozymes as Promozyme D2.

Pullulanase 3 derived from *Bacillus acidopullulyticus* and having the sequence showed in SEQ ID NO: 4.

Acid fungal alpha-amylase derived from *Aspergillus niger* and having the sequence showed in SEQ ID NO: 11.

Glucoamylase G1 derived from *Aspergillus niger* (Boel et al., supra).

**Methods**

Alpha-amylase activity (NU)

Alpha-amylase activity may be determined using potato starch as substrate. This method is based on the break-down of modified potato starch by the enzyme, and the reaction is followed by mixing samples of the starch/enzyme solution with an iodine solution. Initially, a blackish-blue color is formed, but during the break-down of the starch the blue color gets weaker and gradually turns into a reddish-brown, which is compared to a colored glass standard.

One Kilo Novo alpha amylase Unit (KNU) equals 1000 NU. One KNU is defined as the amount of enzyme which, under standard conditions (*i.e.*, at 37°C +/- 0.05; 0.0003 M $Ca^{2+}$; and pH 5.6) degrades 5.26 g starch dry matter (Merck Amylum solubile).

Acid alpha-amylase activity (AFAU)

Acid alpha-amylase activity may be measured in AFAU (Acid Fungal Alpha-amylase Units), which are determined relative to an enzyme standard. 1 FAU is defined as the amount of enzyme which degrades 5.260 mg starch dry matter per hour under the below mentioned standard conditions.

Acid alpha-amylase, an endo-alpha-amylase (1,4-alpha-D-glucan-glucanohydrolase, E.C. 3.2.1.1) hydrolyzes alpha-1,4-glucosidic bonds in the inner regions of the starch molecule to form dextrins and oligosaccharides with different chain lengths. The intensity of color formed with iodine is directly proportional to the concentration of starch. Amylase activity is determined using reverse colorimetry as a reduction in the concentration of starch under the specified analytical conditions.

### ALPHA - AMYLASE

STARCH + IODINE $\xrightarrow[40', pH\ 2,5]{}$ DEXTRINS + OLIGOSACCHARIDES

$\lambda = 590\ nm$

blue/violet          t = 23 sec.      decoloration

Standard conditions/reaction conditions:

|  |  |
|---|---|
| Substrate: | Soluble starch, approx. 0.17 g/L |
| Buffer: | Citrate, approx. 0.03 M |
| Iodine (I2): | 0.03 g/L |
| CaCl2: | 1.85 mM |
| pH: | $2.50 \pm 0.05$ |
| Incubation temperature: | 40°C |
| Reaction time: | 23 seconds |
| Wavelength: | 590 nm |
| Enzyme concentration: | 0.025 AFAU/mL |
| Enzyme working range: | 0.01-0.04 AFAU/mL |

Glucoamylase activity (AGU)

The Novo Glucoamylase Unit (AGU) is defined as the amount of enzyme, which hydrolyzes 1 micromole maltose per minute at 37°C and pH 4.3.

The activity is determined as AGU/ml by a method modified after (AEL-SM-0131, available on request from Novozymes) using the Glucose GOD-Perid kit from Boehringer Mannheim, 124036. Standard: AMG-standard, batch 7-1195, 195 AGU/ml. 375 microL substrate (1% maltose in 50 mM Sodium acetate, pH 4.3) is incubated 5 minutes at 37°C. 25 microL enzyme diluted in sodium acetate is added. The reaction is stopped after 10 minutes by adding 100 microL 0.25 M NaOH. 20 microL is transferred to a 96 well microtitre plate and 200 microL GOD-Perid solution (124036, Boehringer Mannheim) is added. After 30 minutes at room temperature, the absorbance is measured at 650 nm and the activity calculated in AGU/ml from the AMG-standard. A detailed description of the analytical method (AEL-SM-0131) is available on request from Novozymes.

Pullulanase activity (PUN):

One pullulanase unit (PUN) is defined as the amount of enzyme, which is capable of forming 1 micromole glucose from pullulan substrate per minute at 50°C in a pH 5 citrate buffer.

Pullulanase samples are incubated with substrate (red pullulan). Endo-pullulanase hydrolyses the alpha-1,6-glycosidic bonds in red pullulan, releasing red substrate degradation products. Non-degraded substrate is precipitated using ethanol. The amount of color released is measured spectrophotometrically at 510 nm and is proportional to the endo-pullulanase activity in the sample. The color formation of samples is compared to the color formation produced by samples with known pullulanase activity.

Pullulanase is a pullulan 6-glucano-hydrolase with the enzyme classification number E.C.3.2.1.41.

*Reaction conditions*

| | |
|---|---|
| Temperature | 50°C ± 2°C |
| pH | 5.0 |
| Substrate concentration | 0.67 % red pullulan |
| Enzyme concentration | 0.04 - 0.13 PUN/ml |
| Reaction time | 30 min. |
| Wavelength | 510 nm |

*Reagents/ Substrates*

Potassium chloride solution 0.5 M
Red pullulan substrate 2%. Supplier Megazyme, Australia
Citrate buffer 0.05 M pH 5.0
Citrate buffer 0.05 M pH 5.0 with 25 mM cysteine
Ethanol 99.8%
Pullulanase Standard preparation of 904 PUN/g diluted into citrate buffer 0.05 M to a standard dilution series from 0.05 - 0.20 PUN/ml
Blank Citrate buffer 0.05 M
Enzyme samples are diluted in citrate buffer 0.05 M to an activity between 0.06 - 0.20 PUN/ml and compared to the standard dilution series.

**Example 1**

In this example, the ability of different pullulanases to reduce the amount of non-fermentable carbohydrates (dextrin/DP4/4+) in a wort was analyzed.

100% well modified malt was mashed using a mashing temperature profile comprising 46°C for 26 minutes, followed by a 1°C/minute increase till 64°C after which the temperature was held constant. Samples were collected at 98, 128 and 158 minutes.

Enzymes were added at 0 minutes. Glucoamylase and alpha-amylase were added to all treatments in amounts of 1000 AGU/kg DS and 250 AFAU/kg DS respectively. Pullulanase was added according to table 1.

The samples were boiled 10 minutes and filtered (Pore size 0.20 micro-m). The samples were analyzed by HPLC and % non fermentable carbohydrate (DP4/4+) was calculated.

| Table 1: % non fermentable carbohydrate after mashing times of 98, 128 and 158 minutes. | | | | |
|---|---|---|---|---|
| Type of pullulanase | Amount in mg/kg DS | Mashing time | | |
| | | 98 minutes | 128 minutes | 158 minutes |
| None | 0 | 28.87 | 25.16 | 22.94 |
| Pullulanase 1 | 0.74 | 27.64 | 24.55 | 21.96 |
| Pullulanase 1 | 3.65 | 23.96 | 21.35 | 18.92 |
| Pullulanase 1 | 7.25 | 20.71 | 17.74 | 16.11 |
| Pullulanase 1 | 14.39 | 16.36 | 14.47 | 13.22 |
| Pullulanase 2 | 1.86 | 28.34 | 25.21 | 22.79 |
| Pullulanase 2 | 9.26 | 26.81 | 23.28 | 21.36 |
| Pullulanase 2 | 18.40 | 25.68 | 22.33 | 20.17 |
| Pullulanase 2 | 36.59 | 23.56 | 20.58 | 18.35 |
| Pullulanase 3 | 1.37 | 27.11 | 23.38 | 20.51 |

(continued)

| Table 1: % non fermentable carbohydrate after mashing times of 98, 128 and 158 minutes. | | | | |
|---|---|---|---|---|
| Type of pullulanase | Amount in mg/kg DS | Mashing time | | |
| | | 98 minutes | 128 minutes | 158 minutes |
| Pullulanase 3 | 2.74 | 24.46 | 20.93 | 18.18 |

The data in table 1 was used to calculate, by regression, the enzyme dosages of pullulanase 1 and pullulanase 2 needed to get the same effect as 2.74 mg enzyme protein/kg of pullulanase 3 (see table 2).

| Table 2. Pullulanase enzyme protein mg/kg DS needed to achieve the same effect as with 2.74 mg Pullulanase 3 and mashing times of 98, 128 and 158 minutes. | | |
|---|---|---|
| Mashing time | Pullulanase 1 | Pullulanase 2 |
| 98 minutes | 3.38 | 27.33 |
| 128 minutes | 4.04 | 31.06 |
| 158 minutes | 4.56 | 40.37 |

From these results it can be seen that Pullulanase 3 is the most efficient enzyme. Consequently, less Pullulanase 3 enzyme protein is needed to reduce the amount of non-fermentable carbohydrates (dextrin/DP4/4+) and thereby increase attenuation of the wort.

Example 2

The pH profile and temperature profile of different pullulanases were analyzed in the present example.
The pH and temperature profile investigations were based on relative enzyme activity analysis with the conditions described below.
Principals of the analytical method:

The alpha-1,6-glycosidic bonds in pullulan were hydrolyzed by a pullulanase enzyme and the increased reducing sugar capacity was detected by a modified Somogyi-Nelson method.

In the present experiment the activity is assessed as relative activity, where the most active sample is given as 100%. The assay conditions are as follows:

Buffer: citrate 0.1 M + 0.2 M phosphate (adjusted in the pH profile, pH 5 in temperature profile)
Substrate: 0.2% pullulan Sigma (p-4516)
Temperature: 60°C in pH profile, adjusted in temperature profile
Reaction time: 30 minutes

The reducing sugars released by pullulanases were detected according to the principle described in Nelson, 1944, J. Biol. Chem. 153: 375-380 and Somogyi, 1945, J. Biol. Chem. 160: 61-68. In brief, the hydrolysis reaction is stopped by adding Somogyi's cobber reagent in a volume corresponding to the sample volume (e.g., 2 ml to a sample of 2 ml). The samples are boiled for 20 minutes and cooled down prior to the color reaction. This reaction is performed by adding Nelson's reagent corresponding to ½ the volume of the sample (e.g., 2 ml to 4 ml sample+ Somogyi's cobber reagent). The samples are mixed for 2 minutes followed by addition of water in the same amount as Nelson's reagent. The samples are incubated 30 minutes in the dark and measured in a spectrophotometer at 540 nm.
Reagents can be prepared as follows:

Somogyi's cobber reagent:

Dissolve 70.2 g $Na_2HPO_4x2H_2O$ and 80.0 g $KNAC_4H_4O_6x4H_2O$ (kaliumsodiumtartrat) in 1000 ml $H_2O$ (heat slightly). Furthermore add 60 g NaOH; 16.0 g $CuSO_4x5\ H_2O$ and 360.0 g $Na_2SO_4$ and fill to 2000 ml. Adjust pH to 10.8 with NaOH

Nelson's reagent:

Dissolve 100.0 g $(NH_4)_6Mo_7O_{24}$x7 $H_2O$ in 1200 ml $H_2O$. Add 84.0 ml $H_2SO_4$ carefully. Additionally, dissolve 12.00 g $Na_2HAsO_4$x7$H_2O$ (disodiumhydrogenarsenate) in 100 ml $H_2O$, and add this solution slowly to the first solution and fill to 2000 ml.

The pH and temperature profiles for the three pullulanases are given in table 3 and 4 below.

| Table 3: pH profile given in relative (%) enzyme activity at 60°C | | | |
|---|---|---|---|
| pH | Pullulanase 1 | Pullulanase 2 | Pullulanase 3 |
| 2.4 | 2.2 | 1 | 0.2 |
| 2.8 | 6 | 2.4 | 30.7 |
| 3.7 | 10.8 | 68.5 | 90 |
| 4.2 | 23.1 | 100 | 100 |
| 5 | 94 | 77.4 | 92.4 |
| 5.8 | 92.8 | 31.7 | 74.2 |
| 6.3 | 43.1 | 4.4 | 45.3 |
| 6.7 | 3.7 | 0 | 1.8 |
| 7.3 | 0 | 0 | 0 |

| Table 4: Temperature profile given in relative (%) enzyme activity at pH 5.0 | | | |
|---|---|---|---|
| Temp. °C | Pullulanase 1 | Pullulanase 2 | Pullulanase 3 |
| 30 | 22.8 | 36.7 | 19.7 |
| 45 | 64.4 | 72.5 | 47.3 |
| 55 | 100 | 100 | 76.8 |
| 60 | 99.6 | 85.2 | 92.6 |
| 62.5 | 87.1 | 70 | 101.2 |
| 65 | 42.1 | 54.4 | 100 |
| 70 | 9.4 | 12.7 | 75.6 |

These results show that pullulanase 3 has a broad pH profile and activity at high temperatures when compared to the other two pullulanases. These properties make pullulanase 3 a very robust enzyme in brewing (mashing conditions), in particular for saccharification temperatures between 62°C and 65°C.

**Example 3**

Infusion mashing test were made with Pullulanase 1 and 3 (SEQ ID NOS: 1 and 4). 6 mashing samples were prepared with 100% barley as substrate (grist).

Barley (DS%: 86.73) was milled and for each sample 50.0 g (total DS 43.34 g) were mixed with 200 g tap water at 50°C and 3.0 ml 1 M $H_3PO_4$.

All samples were added an identical enzyme mix with no pullulanase.

Samples 1-6 were then added pullulanase according to the following table:

Enzyme dose Activity/g

| Sample no. | Pullulanase 1 PUN/g | Pullulanase 3 PUN/g |
|---|---|---|
| 1 | 0.1 | - |

(continued)

| Sample no. | Pullulanase 1 PUN/g | Pullulanase 3 PUN/g |
|---|---|---|
| 2 | 0.2 | - |
| 3 | 0.5 | - |
| 4 | - | 0.1 |
| 5 | - | 0.2 |
| 6 | - | 0.5 |

The samples were then tested in automated mashing equipment running the following program.

| Time in minutes | Temp. °C |
|---|---|
| 0-30 | 50 |
| 30-44 | rising to 64 |
| 44-104 | 64 |
| 104-120 | rising to 80 |
| 120-140 | 80 |
| 140-155 | falling to 20 |

After mashing all samples were added tap water to a total of 300 g and filtered. The filtered samples were then boiled for 10 minutes and diluted 1:1 with deionised water Subsamples of 50 ml were centrifuged and subjected to standard density analysis for calculation of RDF % (real degree of fermentation). The results are given as RDF % and wort sugar (DP2 and DP4+) in %.

| PUN/g | Pullulanase 1 | Pullulanase 3 |
|---|---|---|
| 0 | 0 | 0 |
| 0.1 | 64 | 64.6 |
| 0.2 | 65 | 66.1 |
| 0.5 | 67.3 | 69.5 |

| | Pullulanase 1 | | Pullulanase 3 | |
|---|---|---|---|---|
| PUN/g | DP2 | DP4+ | DP2 | DP4+ |
| 0 | 48.5 | 31.5 | 48.5 | 31.5 |
| 0.1 | 48.5 | 30 | 49 | 29 |
| 0.2 | 49.5 | 29 | 50 | 27.5 |
| 0.5 | 50.5 | 36.5 | n.d. | n.d. |

The results show that pullulanase 3 is clearly better than pullulanase 1 for making a high % RDF, and still pullulanase 3 is capable of producing maltose levels (DP2 levels) even better than pullulanase 1.

**Example 4**

Infusion mashing test were made with Pullulanase 3 (SEQ ID NO: 4) to evaluate the maltose generating properties of pullulanase 3. 6 mashing samples were prepared with 100% barley as substrate (grist).
Barley (DS%: 86.73) was milled and for each sample 50.0 g (total DS 43.34 g) were mixed with 200 g tap water at 50°C and 5% $Na_2SO_3$ and 1 M $H_3PO_4$

All samples were added an identical enzyme mix with no pullulanase.

Samples 1-6 were then added pullulanase 3 according to the following table:

| Sample no. | Pullulanse 3 PUN/g |
|---|---|
| 1 | - |
| 2 | 0.1 |
| 3 | 0.3 |
| 4 | 0.5 |
| 5 | 1.0 |
| 6 | 2.0 |

The samples were then tested in automated mashing equipment running the following program.

| Time in minutes | Temp. °C |
|---|---|
| 0-30 | 50 |
| 30-44 | rising to 64 |
| 44-104 | 64 |
| 104-120 | rising to 80 |
| 120-140 | 80 |
| 140-155 | falling to 20 |

After mashing all samples were added tap water to a total of 300 g and filtered. The filtered samples were then boiled for 10 minutes and diluted 1:1 with deionized water. Subsamples of 50 ml were centrifuged and subjected to analysis. The results were as follows:

| PUN/g | % glucose | % maltose | % dextrin | RDF % |
|---|---|---|---|---|
| 0 | 3.8 | 47.5 | 34 | 61.2 |
| 0.1 | 3.8 | 48.2 | 32 | 63.2 |
| 0.3 | 3.8 | 49.8 | 28.8 | 65.7 |
| 0.5 | 3.7 | 51.2 | 26.4 | 68.6 |
| 1 | 3.7 | 52.6 | 23.9 | 71 |
| 2 | 3.6 | 55.6 | 20.1 | 74.3 |

The results show that maltose concentration is increasing with increasing dosage of pullulanase 3, and the increase in maltose % is followed by the increase in attenuation (RDF%). The dextrin fraction (HPLC analysis DP4/4+) is at the same time decreasing.

Only barley beta-amylase can produce maltose in this reaction, and pullulanase 3 is facilitating the action of barley beta-amylase.

Glucose concentration is low and not effected by the action of pullulanase 3 which is an advantage when fermenting the produced wort. Pullulanase 3 help degrading dextrin and facilitate formation of maltose, by the barley beta-amylase, and by this increase attenuation (RDF%) of the wort.

**Claims**

1. A process for producing a brewers wort comprising forming a mash from a grist, and contacting said mash with a pullulanase, wherein said pullulanase has an amino acid sequence which is at least 98 % identical to the amino acid sequence shown in SEQ ID NO: 4.

2. The process according to claim 1, wherein the pullulanase is derived from *Bacillus acidopullulyticus.*

3. The process according to claim 1 or 2, further comprising contacting said mash with a glucoamylase and/or alpha-amylase.

4. The process according to any of the preceding claims, wherein the glucoamylase and/or alpha-amylase is derived from *Aspergillus niger* or *Talaromyces emersonii.*

5. The process according to any of the preceding claims, further comprising contacting the mash with an enzyme selected from the group consisting of cellulase, isoamylase, xylanase and protease.

6. The process according to any of the preceding claims, wherein the grist comprises malted and/or unmalted grain.

7. The process according to any of the preceding claims, wherein the unmalted grain and/or the malted grain is selected from the list consisting of barley, wheat, rye, sorghum, millet, corn and rice.

8.  The process according to any of the preceding claims, wherein the malted grain comprises malted grain selected from malted barley, wheat, rye, sorghum, millet, corn, and rice.

9.  The process according to any of the preceding claims, wherein the wort is concentrated and/or dried.

10. The process according to any of the preceding claims, further comprising fermenting the wort to obtain an alcoholic beverage.

11. The process according to claim 10, wherein the alcoholic beverage is a beer.

12. The process according to claim 11, wherein the beer is ale, strong ale, bitter, stout, porter, lager, export beer, malt liquor, barley wine, happoushu, high-alcohol beer, low-alcohol beer, low-calorie beer or light beer.

13. A composition suitable for use in the process according to any of the preceding claims, said composition comprising a pullulanase, a glucoamylase and optionally an alpha-amylase, wherein said pullulanase has an amino acid sequence which is at least 98% identical to the amino acid sequence shown in SEQ ID NO: 4.

14. The composition according to claim 13, wherein the glucoamylase and/or the alpha-amylase is derived from *Aspergillus niger* or *Talaromyces emersonii.*


**Patentansprüche**

1.  Verfahren zum Herstellen einer Brauerwürze umfassend Bilden einer Maische von einem Malzschrot und Inkontaktbringen der Maische mit einer Pullulanase, wobei die Pullulanase eine Aminosäuresequenz aufweist, welche mindestens 98% identisch zu der in SEQ ID NO: 4 gezeigten Aminosäuresequenz ist.

2.  Verfahren nach Anspruch 1, wobei die Pullulanase aus *Bacillus acidopullulyticus* abgeleitet ist.

3.  Verfahren nach Anspruch 1 oder 2, des Weiteren umfassend Inkontaktbringen der Maische mit einer Glucoamylase und/oder alpha-Amylase.

4.  Verfahren nach einem beliebigen der vorhergehenden Ansprüche, wobei die Glucoamylase und/oder alpha-Amylase aus *Aspergillus niger* oder *Talaromyces emersonii* abgeleitet ist.

5.  Verfahren nach einem beliebigen der vorhergehenden Ansprüche, des Weiteren umfassend Inkontaktbringen der Maische mit einem Enzym ausgewählt aus der Gruppe bestehend aus Cellulase, Isoamylase, Xylanase und Protease.

6.  Verfahren nach einem beliebigen der vorhergehenden Ansprüche, wobei das Malzschrot gemälztes und/oder nichtgemälztes Getreide umfasst.

7.  Verfahren nach einem beliebigen der vorhergehenden Ansprüche, wobei das nicht-gemälzte Getreide und/oder das gemälzte Getreide ausgewählt ist aus der Liste bestehend aus Gerste, Weizen, Roggen, Sorghum, Hirse, Mais und Reis.

8.  Verfahren nach einem beliebigen der vorhergehenden Ansprüche, wobei das gemälzte Getreide gemälztes Getreide ausgewählt aus gemälzter Gerste, Weizen, Roggen, Sorghum, Hirse, Mais und Reis umfasst.

9.  Verfahren nach einem beliebigen der vorhergehenden Ansprüche, wobei die Würze konzentriert und/oder getrocknet wird.

10. Verfahren nach einem beliebigen der vorhergehenden Ansprüche, des Weiteren umfassend Fermentieren der Würze, um ein alkoholisches Getränk zu erhalten.

11. Verfahren nach Anspruch 10, wobei das alkoholische Getränk ein Bier ist.

**12.** Verfahren nach Anspruch 11, wobei das Bier Ale, starkes Ale, Bitter, Stout, Porter, Lager, Exportbier, Starkbier, Gerstenwein (Barleywine), Happoushu, Bier mit hohem Alkoholgehalt, Bier mit niedrigem Alkoholgehalt, kalorienarmes Bier oder leichtes Bier ist.

**13.** Zusammensetzung geeignet zur Verwendung in dem Verfahren gemäß einem beliebigen der vorhergehenden Ansprüche, wobei die Zusammensetzung eine Pullulanase, eine Glucoamylase und gegebenenfalls eine alpha-Amylase umfasst, wobei die Pullulanase eine Aminosäuresequenz aufweist, welche mindestens 98% identisch zu der in SEQ ID NO: 4 gezeigten Aminosäuresequenz ist.

**14.** Zusammensetzung nach Anspruch 13, wobei die Glucoamylase und/oder die alpha-Amylase aus *Aspergillus niger* oder *Talaromyces emersonii* abgeleitet ist.


**Revendications**

**1.** Procédé de production d'un moût de brasserie comprenant la formation d'une pâte à partir d'une mouture, et la mise en contact de ladite pâte avec une pullulanase, où ladite pullulanase a une séquence d'acides aminés qui est au moins identique à 98 % avec la séquence d'acides aminés représentée par SEQ ID NO : 4.

**2.** Procédé selon la revendication 1, dans lequel la pullulanase est dérivée de *Bacillus acidopullulyticus*.

**3.** Procédé selon la revendication 1 ou 2, comprenant en outre la mise en contact de ladite pâte avec une glucoamylase et/ou une alpha-amylase.

**4.** Procédé selon l'une quelconque des revendications précédentes, dans lequel la glucoamylase et/ou l'alpha-amylase est dérivée d'*Aspergillus niger* ou de *Talaromyces emersonii.*

**5.** Procédé selon l'une quelconque des revendications précédentes, comprenant en outre la mise en contact de la pâte avec une enzyme choisie dans le groupe constitué de cellulase, isoamylase, xylanase et protéase.

**6.** Procédé selon l'une quelconque des revendications précédentes, dans lequel la mouture comprend des grains maltés et/ou non maltés.

**7.** Procédé selon l'une quelconque des revendications précédentes, dans lequel les grains non maltés et/ou les grains maltés sont choisis dans la liste constituée d'orge, de blé, de seigle, de sorgho, de millet, de maïs et de riz.

**8.** Procédé selon l'une quelconque des revendications précédentes, dans lequel les grains maltés comprennent des grains maltés choisis parmi l'orge, le blé, le seigle, le sorgho, le millet, le blé et le riz maltés.

**9.** Procédé selon l'une quelconque des revendications précédentes, dans lequel le moût est concentré et/ou séché.

**10.** Procédé selon l'une quelconque des revendications précédentes, comprenant en outre la fermentation du moût pour obtenir une boisson alcoolisée.

**11.** Procédé selon la revendication 10, dans lequel la boisson alcoolisée est une bière.

**12.** Procédé selon la revendication 11, dans lequel la bière est de l'ale, de l'ale forte, de l'amer-bière, du stout, de la bière ambrée, de la bière blonde, de la bière export, de la liqueur de malt, du vin d'orge, du happoushu, de la bière riche en alcool, de la bière pauvre en alcool, de la bière faible en calories ou de la bière légère.

**13.** Composition appropriée pour une utilisation dans le procédé selon l'une quelconque des revendications précédentes, ladite composition comprenant une pullulanase, une glucoamylase et éventuellement une alpha-amylase, où ladite pullulanase a une séquence d'acides aminés qui est au moins identique à 98 % avec la séquence d'acides aminés représentée par SEQ ID NO : 4.

**14.** Composition selon la revendication 13, dans laquelle la glucoamylase et/ou l'alpha-amylase est dérivée d'*Aspergillus niger* ou de *Talaromyces emersonii*.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4528198 A
- US 4666718 A
- US 4318927 A
- GB 2056484 A
- GB 2069527 A
- US 4355047 A
- WO 9919467 A
- WO 9943794 A
- WO 9623874 A
- WO 9741213 A
- WO 2002038787 A
- WO 9200381 A
- WO 0004136 A
- WO 8402921 A
- WO 9928448 A
- US RE32153 E
- US 4587215 A
- EP 135138 A
- WO 8601831 A
- WO 9117244 A
- WO 9117243 A
- WO 2003062409 A
- US 5736375 A

### Non-patent literature cited in the description

- **WILLOX et al.** *MBAA Technical Quarterly,* 1977, vol. 14, 105
- **WOLFGANG KUNZE.** Technology Brewing and Malting. Research and Teaching Institute of Brewing, 1999
- **FEINBERG ; VOGELSTEIN.** *Anal. Biochem.,* 1983, vol. 132, 6-13
- **NEEDLEMAN ; WUNSCH.** *Journal of Molecular Biology,* 1970, vol. 48, 443-453
- **KELLY et al.** *FEMS Microbiol. Letters,* 1994, vol. 115, 97-106
- **BOEL et al.** *EMBO J.,* 1984, vol. 3 (5), 1097-1102
- *Agric. Biol. Chem.,* 1991, vol. 55 (4), 941-949
- **NELSON.** *J. Biol. Chem.,* 1944, vol. 153, 375-380
- **SOMOGYI.** *J. Biol. Chem.,* 1945, vol. 160, 61-68